# EUROPEAN PATENT SPECIFICATION

(11) **EP 2 062 419 B1**
(45) Date of publication and mention of the grant of the patent: **06.11.2013**
(21) Application number: 06793533.8
(22) Date of filing: 14.09.2006
(51) Int. Cl.: H04L 29/06, H04M 7/00

(54) **Telephony endpoint routing in an IP Multimedia Subsystem**
Telefonieendpunktweglenkung in einem IP-Multimedia-Subsystem
Routage d'extrémité de téléphonie dans un Sous-Système Multimédia IP

(43) Date of publication of application: 27.05.2009
(73) Proprietor: Telefonaktiebolaget LM Ericsson (publ), 164 83 Stockholm (SE)
(72) Inventor: ARÁUZ ROSADO, Jesús Javier, E-28031 Madrid (ES)
(74) Representative: Elzaburu Marquez, Alberto
(86) International application number: PCT/EP2006/066382
(87) International publication number: WO 2008/031460

(56) References cited:
- WO-A-2004/071043
- WO-A-2004/086703
- US-A1- 2005 058 125

## Description

The present invention generally relates to the routing of sessions between originating and destination subscribers through an IP Multimedia Subsystem. In particular, the invention relates to the routing of sessions through an IP Multimedia Subsystem where the originating subscriber or the destination subscriber, or both, are subscribers of a legacy network.

### BACKGROUND

The IP multimedia core network subsystem, hereinafter IMS, enables operators to offer their subscribers multimedia services based on, and built upon, Internet applications, services and protocols as described in 3GPP TS 23.228 v7.4.0. The IMS is an IP-based multimedia network that allows an IP-based User Equipment, hereinafter UE, to register to the network and exchange multimedia information. In addition it also provides basic value-added services to its users like, for example, session transfer, conferencing, presence status, etc.

IMS generally provides services to end users who are subscribers of a network operator by directly supporting multimedia communications services to or from that operator's subscribers. However, IMS may also be used in a number of other configurations where the capabilities of IMS are used to support subscribers of a Circuit Switched (hereinafter CS) domain of an IMS operator, or in various other kinds of arrangements where the IMS capabilities may be used to support interconnection of other networks. That is, IMS may be used for transit network support.

In particular, an IMS operator may provide transit functionality for its own, non-IMS subscribers in a scenario where some of its own subscribers have been migrated to IMS while others are still CS domain subscribers. Also in particular, an IMS operator may provide transit functionality to other network operators such as, for example, an operator of a Public Switched Telephony Network, known as PSTN, or an operator of a Public Land Mobile Network, known as PLMN, or an IP network operator, in order to provide connectivity to both PSTN and IP, PLMN and IP, and to PLMN and PSTN.

Both PSTN and PLMN are exemplary networks of a Circuit Switch domain; they both traditionally exchange signalling communications based on the so-called Signalling System no. 7, generally known as SS7; and, for the sake of simplicity, they both may be further referred as legacy networks throughout this specification.

Regarding communications throughout an IMS network, IMS entities as well as user agents serving UEs communicate with each other via a Session Initiation Protocol, hereinafter SIP, in accordance with RFC 3261. In particular, IMS entities and user agents communicating via SIP are often referred to as SIP entities and SIP user agents respectively.

A user of the IMS network is identified by means of an IP Multimedia Public Identity, known as IMPU. The IMPU is conceptually similar to a subscriber's telephone number in a legacy network such as the PSTN or the PLMN. The subscriber's telephone number is also generally known as subscriber number for the sake of simplicity. An IMPU is a Universal Resource Identifier, hereinafter URI, as defined for SIP, namely a so-called SIP URI. An IMS user may be given one single IMPU or a plurality of IMPUs. When a user registers to the IMS network with an UE, the user selects one of the given IMPUs and requests the network to associate that selected IMPU with a so-called Contact URI, being the Contact URI an URI that points to the UE used for registration. On the other hand, a user of a legacy CS network is identified by an e.164 subscriber number that, for use in the IMS network, is encapsulated in a URI defined for telephony, namely a so-called tel URI. In order to allow users of the legacy network to call IMS users, an IMS user may be given an IMPU in the form of a tel URI. Thus, an IMPU is a SIP URI or a tel URI that uniquely identifies an IMS user, although a single IMS user may be given more than one IMPU.

Some IMS entities are involved in communications between IMS users as described in 3GPP TS 23.228 v7.4.0 and summarized following this.

A user accesses an IMS network via a Proxy Call Session Control Function, hereinafter P-CSCF, which represents a single access point to the IMS. Once the user registers to the IMS network, outgoing and incoming communications are exchanged through the P-CSCF. This P-CSCF acts as a SIP proxy, and may behave as a User Agent. Amongst others functions, the P-CSCF is in charge of forwarding a SIP register request received from the UE to an entry point determined using the home domain name, as provided by the UE, forwarding SIP messages received from the UE to another SIP server whose name the P-CSCF has received as a result of the registration procedure, and forwarding the SIP request or response to the UE.

The above entry point determined using the home domain name is generally known as an Interrogating Call Session Control Function, hereinafter I-CSCF, which is the contact point within an operator's network for all connections destined to a user of that network operator, or a roaming user currently located within that network operator's service area. This I-CSCF is responsible for finding a SIP server in which a given IMPU for a user has been registered, and thus serving said user. In certain configurations, the I-CSCF may perform transit routing functions. If the I-CSCF determines, based on a subscriber database query, that the destination of the session is not within the IMS, it may forward the request or it may return a response with a failure response towards the originating endpoint.

A Serving Call Session Control Function, hereinafter S-CSCF, is the SIP server in which the given IMPU for a user has been registered, and is also known as a SIP registrar. Once an IMPU is registered, the binding between the IMPU and the Contact URI pointing to the UE is stored in the S-CSCF. Any incoming and outgoing communication addressing an IMPU registered in a given S-CSCF flows through that S-CSCF. If a user has registered one or more IMPUs from different UEs, the S-CSCF forks an incoming communication addressed to one of those IMPUs to all the UEs bound to that IMPU.

Apart from these IMS entities, another significant entity is the UE, which is the endpoint of the communication. The UE has one or more associated URIs bound to the IMPU of the IMS user handling the device during an IMS registration procedure.

In order to enable users of an IMS network to establish communication with users of legacy networks, such as PSTN or PLMN, the IMS includes inter-working elements that allow these communications.

A first inter-working element of the IMS for communication with a legacy network is the Media Gateway Control Function, hereinafter MGCF, which is responsible for the inter-working with the legacy network and for creating and managing CS endpoints in a so-called Media Gateway and according to SIP signalling flows. The MGCF is considered a SIP endpoint that receives and terminates requests on behalf of a legacy network and Media Gateway. Other IMS nodes consider the signalling as if it came from a S-CSCF.

Traffic from a legacy network arrives at a configured MGCF for translation to SIP, whereas IMS traffic arrives at a configured entry point, such as the I-CSCF, the latter routing the traffic to either an IP network or to a legacy network depending on the terminating endpoint.

A second inter-working element of the IMS is the above Media Gateway, hereinafter MGW, which is a physical device controlled by the MGCF, includes a number of CS endpoints, and is capable of transcoding between CS media and IP-based media suitable to be exchanged with an IMS UE. The MGW is in charge of bearer inter-working.

A third inter-working element of the IMS is a Breakout Gateway Control Function, hereinafter BGCF, which may be provisioned as the contact point within an operator's network for transit IMS scenarios. For terminations in a legacy network, the BGCF selects the network in which CS domain breakout is to occur. If the BGCF determines that the breakout is to occur in the same network in which the BGCF is located, the BGCF selects a MGCF which will be responsible for the inter-working with said CS domain. If the breakout is in another network, the BGCF forwards this session signalling to another BGCF in the other network. When used in a transit configuration, if the BGCF determines that there is another IP destination for the next hop, it forwards the message to a corresponding contact point. In particular, the BGCF is a SIP proxy in charge of selecting the most suitable MGCF to handle an outgoing communication, namely from the IMS, towards a legacy CS network. Traditional criteria for selection of a MGCF may include geographical reasons, cost, or network resource optimization. The BGCF performs this selection whilst processing a session establishment request and, once the communication between the originating entity and the MGCF is established, the BGCF is not further involved in the signalling path for such session.

Transfer and conference services involve more than two users and respective sessions between them. Both services require that, at a certain stage of the service execution, a new session is established that references an existing session. An exemplary teaching about these services is the so-called Session Referral, which is implemented in IMS in accordance with mechanisms described in RFC 3515. Session Referral represents a service whereby, during a session established between two IMS subscribers, one of them (the referrer) requests the other one (the referred) to establish a session with a third IMS subscriber (the referee). The referee may or may not have a session with the referrer. This service is used to implement the telephony services commonly known as "transfer" and "blind transfer". A traditional operation for this service is where a first user, the referrer, establishes a first session with a second user, the referred, and both first and second users agree on trying to establish a session between the second user and a third user, the referee. To this end, the first user, the referrer, establishes a second session with the third user, the referee, to ask for consent to communicate with the second user, the referred. If the consent is given, the second session between first and third users has to be replaced by a third session between second and third users, and the first session between the first and second users has to be also replaced by the third session between second and third users.

The application of this mechanism where at least one of the users is a subscriber of a legacy network requires the establishment of a session for this subscriber through a particular MGCF inter-working with the legacy network and selected from the BGCF of the IMS network at the time another user invites such subscriber. For example, where the referee is a subscriber of a legacy network, the above second session between the referrer and the referee is established through a particular MGCF, whereas the third session between the referred and the referee may be established through a different MGCF.
Patent document WO 2004/086703 discloses a system and a method in which a subscriber of a legacy telephony network can be invited to participate in a conference taking place within an IMS network. The invitation makes use of the SIP REFER message which is sent to a MGCF capable of communicating with the invited subscriber. The identifiers of the legacy telephony subscriber and the other participants are properly included within the REFER message.

### SUMMARY

Where transfer or conference services involve at least one subscriber of a legacy network, the establishment of different sessions involving such subscriber of the legacy network may be carried out through different MGCF instances since the criteria used by the BGCF to select a suitable MGCF does not include any relationship with other sessions previously established for the subscriber of the legacy network and, therefore, the BGCF might select for a new session a new MGCF not having any knowledge about any previously existing session established through a different MGCF.

In this situation, the replacement of a session established between the subscriber of the legacy network and a first user of the service by another session established between the subscriber of the legacy network and a second user of the service for achieving a session referral service cannot be effectively carried out without disturbing the sessions already established.

It is an object of the present invention to obviate at least some of the above disadvantages and provide for an enhanced mechanism to carry out session referral services involving a subscriber of a legacy network through a transit IMS network.

The object above is generally accomplished in accordance with the invention by providing a MGCF device with means for generating a so-called IMS Telephony Endpoint, hereinafter ITE, which includes a first information field with a telephony Universal Resource Identifier "tel URI" identifying a served subscriber, originating or destination subscriber as the case may be, and a second information field with information usable to identify itself as the particular MGCF holding a session for such served subscriber Such ITE is submitted towards the IMS and a further referral service request involving such session for the served subscriber includes this ITE so that the IMS can identify and select the particular MGCF holding such session among a plurality of MGCF instances. In particular, a BGCF and an I-CSCF are IMS entities that may receive the generated ITE for further inclusion in referral service requests. Also in particular, the ITE may include an additional identifier to identify the session.

An IMS Telephony Endpoint is, conceptually speaking, a SIP endpoint located within a specific MGCF instance. The IMS Telephony Endpoint is identified by an IMS Telephony Endpoint identifier that may be also referred to, for the sake of simplicity, as IMS Telephony Endpoint throughout this specification. In order to address the IMS Telephony Endpoint, some IMS entities are enabled to recognize this identifier and route the session establishment requests to the MGCF indicated by said identifier.

In this respect, a MGCF is an IMS inter-working element towards a legacy network for a session establishment request terminating in a destination subscriber who is subscriber of said legacy network. On the other hand, a MGCF is the entry point to an IMS network for a session establishment request originated from an originating subscriber who is subscriber of a legacy network. The present inventions takes into account different aspects derived from the different behaviour of a transit IMS network when inter-working with an originating legacy network and when inter-working with a destination legacy network, and thus provides for different enhanced IMS entities and methods to apply in accordance with these different aspects.

A MGCF device inter-working with a destination legacy network for routing through an IP Multimedia Subsystem "IMS" a session establishment request originated from an originating subscriber and addressing a destination subscriber of the legacy network thus includes terminating input means for receiving from the IMS a session establishment request addressing a destination subscriber of a destination legacy network, the destination subscriber identified by a subscriber number.

In accordance with a first aspect of the invention, this MGCF device further includes: terminating processing means for generating a terminating IMS Telephony Endpoint "ITE", and termining output means for returning towards the IMS a session establishment response including the terminating ITE to identify the destination subscriber and itself as the MGCF holding the session. As generally commented above, this terminating ITE includes a first information field with a telephony Universal Resource Identifier "tel URI" identifying the destination subscriber, and a second information field with information usable to identify itself as the particular MGCF holding a session between the originating and destination subscribers.

The terminating ITE may be generated immediately after having received at the MGCF the session establishment request, however, the generation of such terminating ITE seems to be more advantageous once the MGCF device is aware of a successful response from the destination legacy network, that is, once the session can be established at the MGCF. This may be achieved by making the generation of the terminating ITE responsive to the reception of a session establishment response from the destination legacy network.

Moreover, for the sake of compatibility with existing IMS entities, this MGCF may further comprise a converter for translating the terminating ITE into a Universal Resource Identifier with semantic rules according to a Session Initiation Protocol, a "SIP URI", which may be returned towards the IMS as terminating ITE, in particular, towards the BGCF.

As already commented above, a referral service can be completed where the referral service request for the subscriber includes this ITE. To this end, this MGCF further includes second terminating input for receiving a message addressing the terminating ITE; and a decomposer for extracting the first information field and for determining the particular destination subscriber. In case the session identifier is included in the ITE, the decomposer can more easily select the session to be replaced for the referral service.

On the other hand, a MGCF device inter-working with an originating legacy network for routing through an IP Multimedia Subsystem "IMS" a session establishment request received from an originating subscriber of an originating legacy network and addressing a destination subscriber thus includes originating input means for receiving from the originating subscriber of the originating legacy network a session establishment request addressing the destination subscriber, the originating subscriber identified by a subscriber number.

In accordance with a second aspect of the invention, this MGCF device further includes: originating processing means for generating an originating IMS Telephony Endpoint "ITE"; and originating output means for forwarding towards the IMS the session establishment request including the originating ITE to identify the originating subscriber and itself as the MGCF holding the session. As generally commented above, the originating ITE includes a first information field with a telephony Universal Resource Identifier "tel URI" identifying the originating subscriber, and a second information field with information usable to identify itself as the particular MGCF holding the session between the originating and destination subscribers.

Also for the sake of compatibility with existing IMS entities, and particularly with the above MGCF for inter-working with the destination legacy network, this MGCF for inter-working with the originating legacy network may also comprise a converter for translating the originating ITE into a Universal Resource Identifier with semantic rules according to a Session Initiation Protocol, a "SIP URI", which may be forwarded towards the IMS as originating ITE, in particular, towards the I-CSCF.

The completion of a referral service can be carried out where the referral service request for a subscriber, previously originating or destination subscriber, includes the corresponding ITE and the BGCF can identify from the ITE, and select for the new session, the MGCF holding the previous session. In this respect, a BGCF device for locating an optimum MGCF to route a session establishment request, originated from an originating subscriber and received in the IMS towards a destination subscriber, comprises means for addressing more than one MGCF.

In accordance with a third aspect of the invention, this BGCF device further includes: means for receiving a message addressing an IMS Telephony Endpoint "ITE", the ITE including a first information field with a telephony Universal Resource Identifier "tel URI" identifying a subscriber and a second information field with information usable to identify a particular MGCF; a decomposer for extracting the second information field and for determining the particular MGCF; and means for submitting the received message addressing the ITE towards the particular MGCF.

Given that the received ITE might have been generated for an originating subscriber of a legacy network or for a destination subscriber of a legacy network, the BGCF may advantageously include means for differentiating whether a received ITE is an originating ITE identifying an originating subscriber of an originating legacy network, or a terminating ITE identifying a destination subscriber of a destination legacy network.

Correspondingly with the above BGCF and with the above MGCF inter-working with a destination legacy network, a method for routing through an IP Multimedia Subsystem "IMS" a session establishment request originated by an originating subscriber and addressing a destination subscriber of a destination legacy network includes a step of receiving at a MGCF, from the IMS, a session establishment request addressing the destination subscriber of the destination legacy network, wherein the destination subscriber is identified by a subscriber number. In particular, the session establishment request is received from a BGCF of the IMS.

In accordance with a fourth aspect of the invention, this method further comprises: a step of generating at the MGCF a terminating IMS Telephony Endpoint "ITE", and a step of returning towards the IMS a session establishment response including the terminating ITE to identify the destination subscriber and itself as the MGCF holding the session. In particular, the session establishment response with the terminating ITE is returned to the BGCF. The terminating ITE includes, as already commented above, a first information field with a telephony Universal Resource Identifier "tel URI" identifying the destination subscriber, and a second information field with information usable to identify the MGCF as the particular MGCF holding a session between the originating and destination subscribers.

For alignment purposes with corresponding advantageous features in the BGCF and MGCF devices, the step of generating the terminating ITE in this method is responsive to a step of receiving at the MGCF a session establishment response from the destination legacy network to be returned to the IMS and, more particularly, to the BGCF. Moreover, this method may further include a step of translating the terminating ITE into a Universal Resource Identifier with semantic rules according to a Session Initiation Protocol, a "SIP URI" to be returned towards the IMS as terminating ITE.

In order to complete a referral service this method may further include a step of receiving at the BGCF a message addressing the terminating "ITE"; a step of extracting the second information field to determine the particular MGCF; a step of submitting the received message addressing the ITE towards the particular MGCF; a step of receiving at the MGCF the message addressing the terminating ITE; a step of extracting the first information field; and a step of determining the particular destination subscriber.

Correspondingly with the above BGCF and with the above MGCF inter-working with an originating legacy network, a method for routing through an IP Multimedia Subsystem "IMS" a session establishment request received from an originating subscriber of an originating legacy network and addressing a destination subscriber includes a step of receiving at a MGCF from the originating subscriber a session establishment request addressing the destination subscriber, wherein the originating subscriber is identified by a subscriber number.

In accordance with a fifth aspect of the invention, this method further comprises: a step of generating at the MGCF an originating IMS Telephony Endpoint "ITE"; and a step of forwarding towards the IMS the session establishment request including the originating ITE to identify the originating subscriber and the MGCF holding the session. In particular, the session establishment request with the originating ITE is forwarded towards an I-CSCF of the IMS. The originating ITE includes a first information field with a telephony Universal Resource Identifier "tel URI" identifying the originating subscriber, and a second information field with information usable to identify the MGCF as the particular MGCF holding a session between the originating and destination subscribers.

For alignment purposes with corresponding advantageous features in the BGCF and MGCF devices, this method may further include a step of translating the originating ITE into a Universal Resource Identifier with semantic rules according to a Session Initiation Protocol, a "SIP URI" to be forwarded towards the IMS as originating ITE.

Also in order to complete a referral service, this method may further include a step of receiving at the MGCF a message addressing the originating ITE; a step of extracting the first information field to determine the particular originating subscriber; and a step of submitting the message towards the originating legacy network.

In order to access the IMS, an IMS subscriber uses a user equipment comprising means for sending and receiving a session establishment request to and from the IMS, and means for receiving and sending a successful session establishment response from and to the IMS.

In accordance with a sixth aspect of the present invention, and in order to complete a referral service and, more particularly, in order to include the originating or terminating ITE in the referral service request by another end-subscriber, this user equipment also comprises means for receiving an IMS Telephony Endpoint "ITE", the ITE including a first information field with a telephony Universal Resource Identifier "tel URI" identifying the originating or destination subscriber with whom a session has been established, and a second information field with information usable to identify the particular MGCF holding the session.

### BRIEF DESCRIPTION OF THE DRAWINGS

The features, objects and advantages of the invention will become apparent by reading this description in conjunction with the accompanying drawings, in which:

**FIG. 1a** and **FIG. 1b** represent a basic block diagram illustrating a simplified scenario for a transfer service involving one subscriber of a legacy network and two IMS subscribers.

**FIG. 2a** and **FIG. 2b** represent a basic block diagram illustrating a simplified scenario for an ad-hoc conference service involving one subscriber of a legacy network and two IMS subscribers.

**FIG. 3** is a basic block diagram presenting the structural elements involved in session referral services involving IMS subscribers and subscribers of a legacy network, and where the session establishment is routed through an IMS transit network.

**FIG. 4** illustrates a fault situation that may occur nowadays during invocation of session referral services through an IMS network where at least one subscriber of a legacy network is involved.

**FIG. 5** illustrates an embodiment of a method for routing through an IMS network a session establishment request received from an originating subscriber of an originating legacy network and addressing a destination IMS subscriber.

**FIG. 6** illustrates an embodiment of a method for routing through an IMS network a session establishment request received from an originating IMS subscriber and addressing a destination subscriber of a destination legacy network.

**FIG. 7** illustrates an embodiment of a method for routing through an IMS network a session establishment request received from an originating subscriber of an originating legacy network and addressing a destination subscriber of a destination legacy network.

**FIG. 8** illustrates an embodiment of a method for routing through an IMS network a session transfer request involving a destination subscriber of a destination legacy network, the transfer request to be received at the MGCF holding the previous session for the destination subscriber.

**FIG. 9** represents basic structural elements of a MGCF in accordance with an embodiment of the invention.

**FIG. 10** represents basic structural elements of a BGCF in accordance with an embodiment of the invention.

### DETAILED DESCRIPTION

The following describes some preferred embodiments for an enhanced mechanism to carry out session referral services involving a subscriber of a legacy network through a transit IMS network.

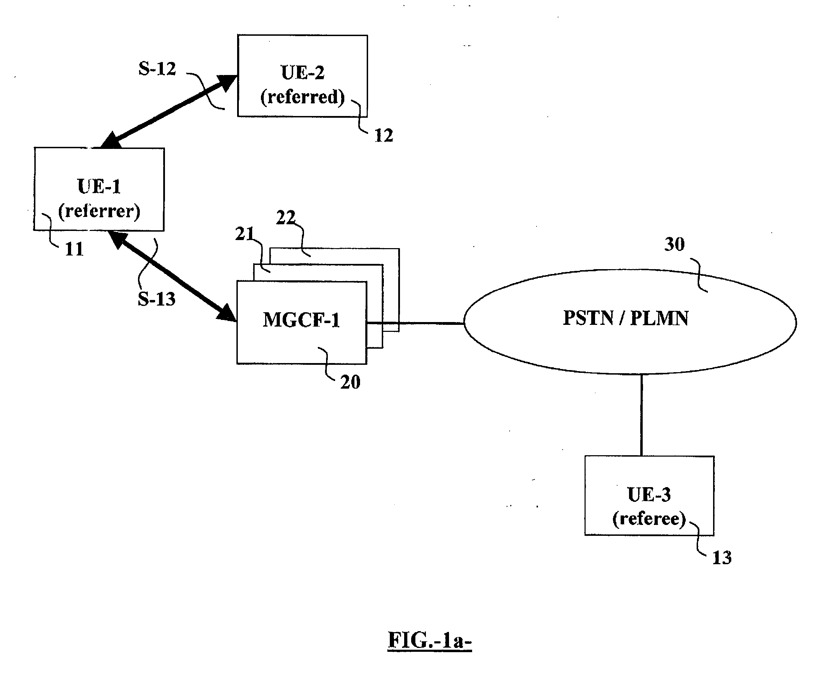

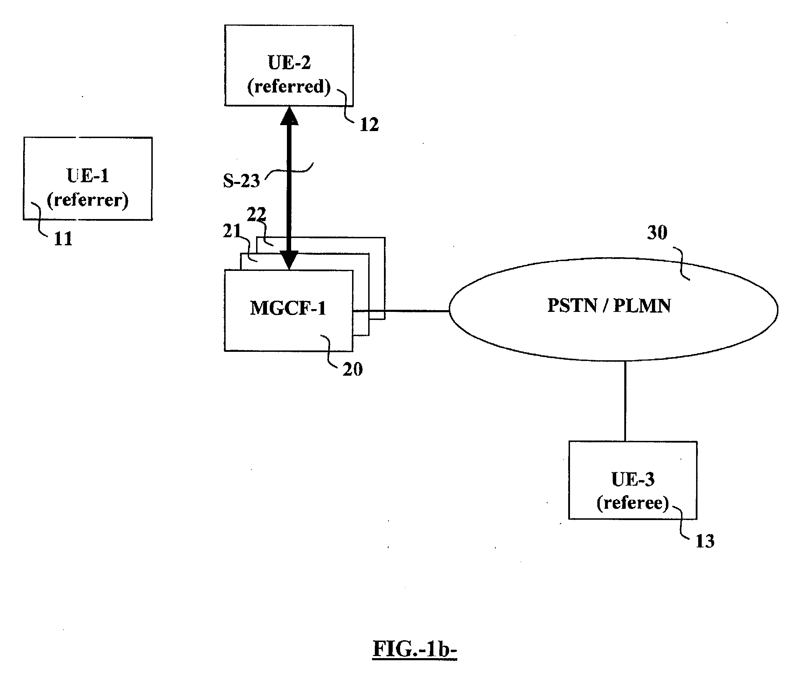

Fig. 1a illustrates a simplified scenario for a transfer service where both referrer 11 and referred 12 are IMS subscribers, whereas the referee 13 is a subscriber of a legacy network 30. The referrer 11 and referred 12 have a session S-12 already established between them and they agree on a call transfer between the referrer and the referee. To this end, the referrer 11 establishes a session S-13 with the referee 13 through a MGCF 20 selected by a BGCF not shown in the drawing. The referrer 11 talks to the referee 13 to indicate the call transfer. A successful call transfer is illustrated in Fig. 1b, wherein the previous session S-13 between the referrer 11 and the referee 13 has been replaced at the MGCF 20 by a new session S-23 between the referred 12 and the referee 13.

To achieve this, the BGCF in the IMS network is enabled to select the same MGCF 20, and not another one 21-22, for receiving the transfer request, and thus for replacing the first session S-13 by the second session S-23.

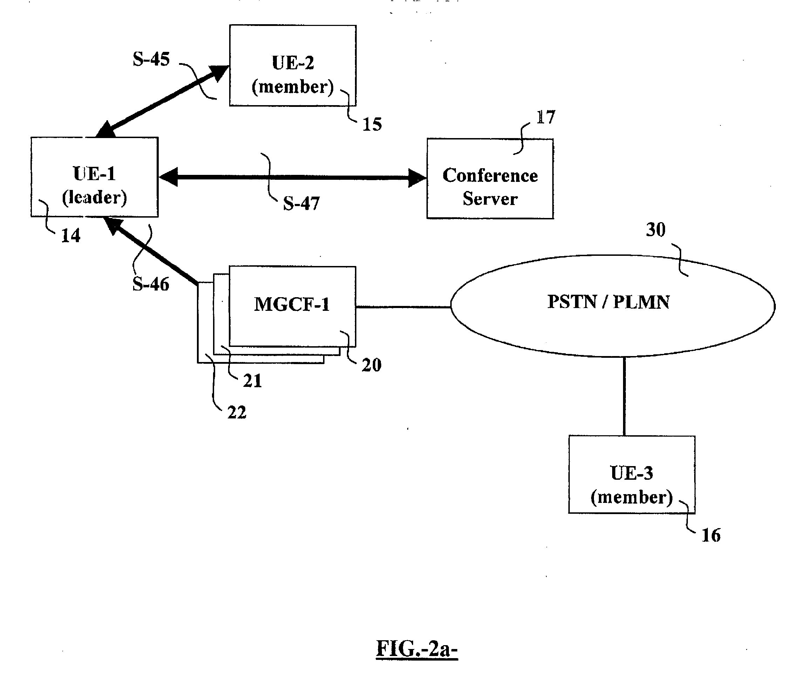

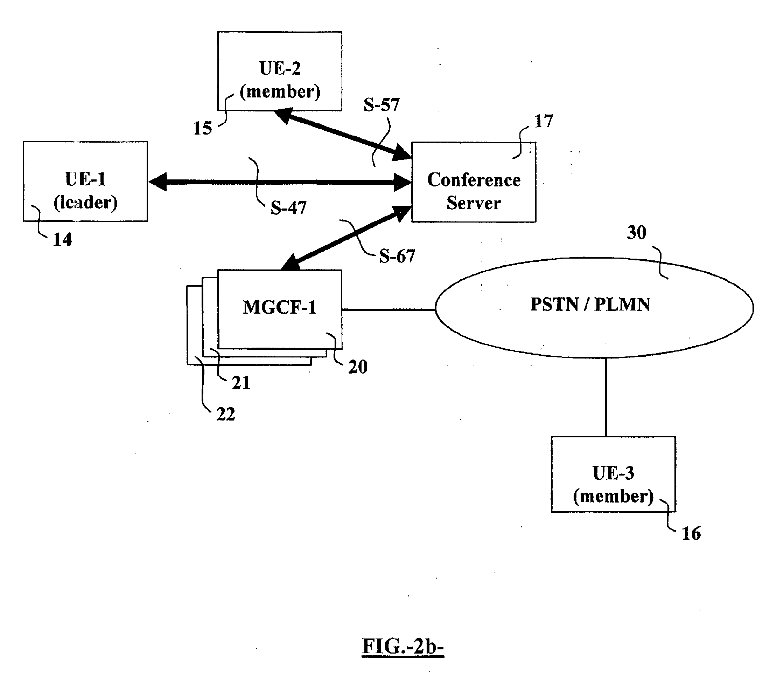

Fig. 2a illustrates a simplified scenario for an ad-hoc conference service where a first member 14, the leader, and a second member 15 both are IMS subscribers, whereas a third member 16 is a subscriber of a legacy network 30. The scenario, whilst being similar to the one in Fig. 1a and 1b, incorporates a conference server 17. In operation, the leader 14 has a first session S-45 established with IMS subscriber member 15, and a second session S-46 with the subscriber 16 of the legacy network. The conference is carried out, as Fig. 2b illustrates, through the conference server 17 by establishing a session S-47 between the leader 14 and the conference server 17, by replacing the first session S-45 with a new first session S-57 between the IMS subscriber member 15 and the conference server 17, and by replacing the second session S-46 with a new second session S-67 between the subscriber 16 of the legacy network and the conference server 17. As in a previous session referral service, the above exemplary scenario for call transfer, the conference can be carried out inasmuch as the BGCF, which is not shown in the drawing, is enabled to select the same MGCF 20 in the IMS network, and not another one 21-22.

In an IMS network where several MGCF instances 20, 21, 22 have been deployed due to, for example, redundancy or load sharing reasons, the new session to be established between the referee 13 and the referred 12 for the transfer case, or between the conference member 16 and the conference server 17 for the ad-hoc conferencing case, comes, in accordance with an embodiment of the invention, through the same MGCF instance 20 as previous sessions established with the referrer 11 or the conference leader 14 respectively, because if the session establishment request ended up in another MGCF instance, this other instance would not have any information about an existing session with the referee 13 or the conference member 16, as the case might be.

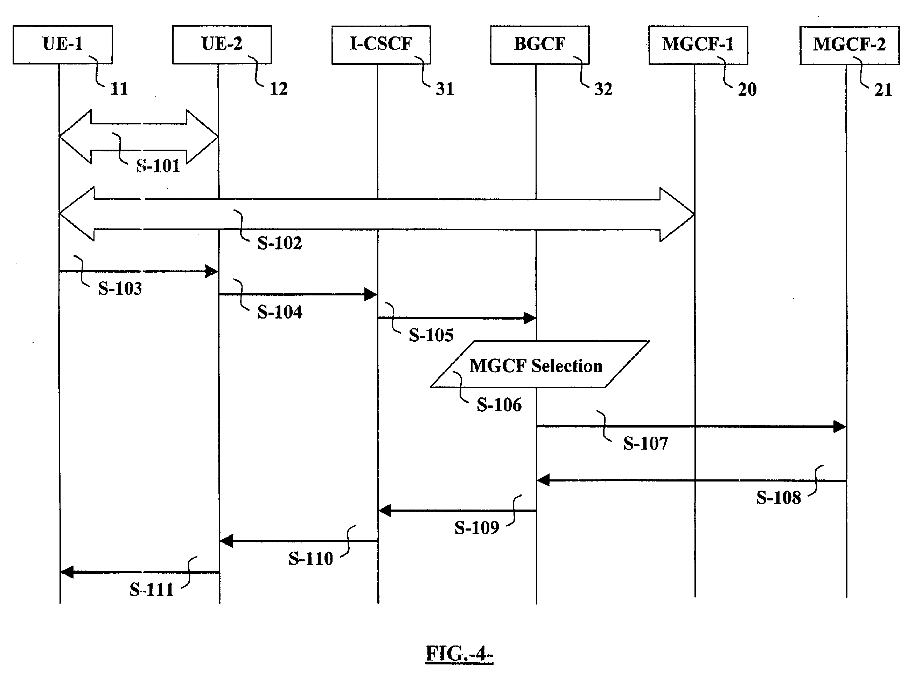

An exemplary sequence of actions carried out in a traditional system is shown in Fig. 4, wherein two IMS subscribers 11, 12 have already established a session during step S-101. Then, one of these IMS subscribers 11 establishes during step S-102 another session with a destination subscriber of a legacy destination network. During this step S-102, and not shown in the drawing, the I-CSCF 31 determines the destination subscriber is a subscriber of a legacy network and submits the session establishment request towards the BGCF 32. The BGCF selects an appropriate MGCF-1 20 to handle the session and forwards the session establishment request thereto. The MGCF-1 submits the request to the destination network and, upon a successful response, initiates a session between the legacy destination subscriber 13 and the originating subscriber 11. When the originating subscriber 11 initiates a call transfer request addressing the legacy destination subscriber 13, such a request arrives to the BGCF 32 that, not having information about previous sessions involving such legacy destination subscriber 13, selects a suitable new MGCF-2 21 for handling this new session, under load sharing criteria for example. The transfer request is forwarded to this new MGCF-2 which cannot replace the previous session by the new one because it is not in charge of the previous session.

Similar problems may occur when the originating subscriber is a subscriber of a legacy network and the IMS network includes several instances of the MGCF. In This situation, the I-CSCF might select a MGCF different than the one holding previous sessions for the originating subscriber.

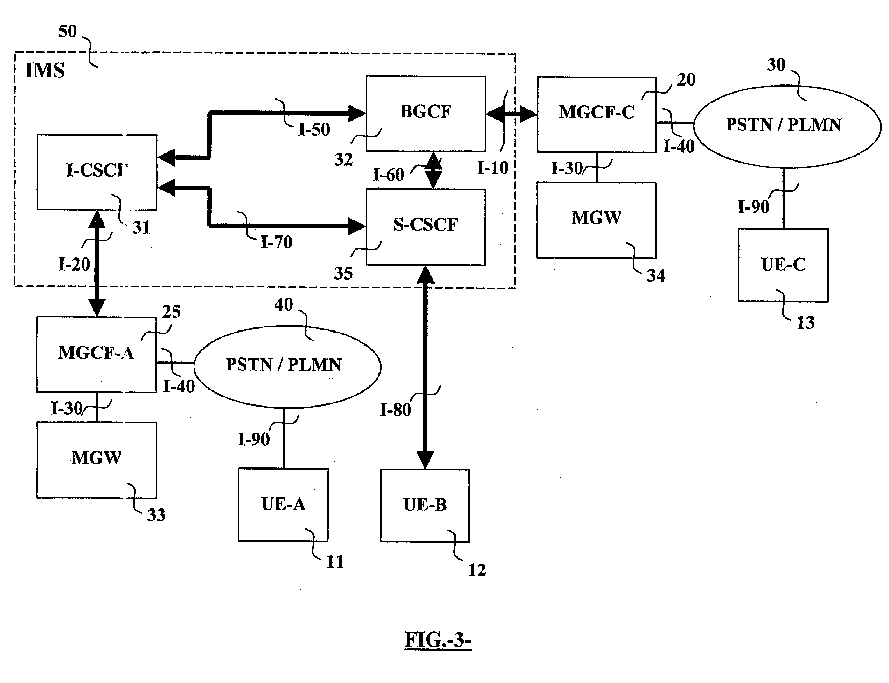

The present invention thus provides different embodiments applying at the terminating side and at the originating site to overcome these problems. Fig. 3 illustrates a basic scenario showing IMS and non-IMS entities involved in a terminating session towards a destination subscriber 13 of a legacy destination network 30, and also the IMS and non-IMS entities involved in originating a session from an originating subscriber 11 of a legacy originating network 40 or from an originating subscriber 12 who is an IMS subscriber. Even though both MGCF 20, 25 have been presented outside the IMS network to better show they are basically required for inter-working with legacy networks, in fact, the MGCF 20, 25 is an entity introduced and described by corresponding IMS technical specifications, and thus considered to be included therein.

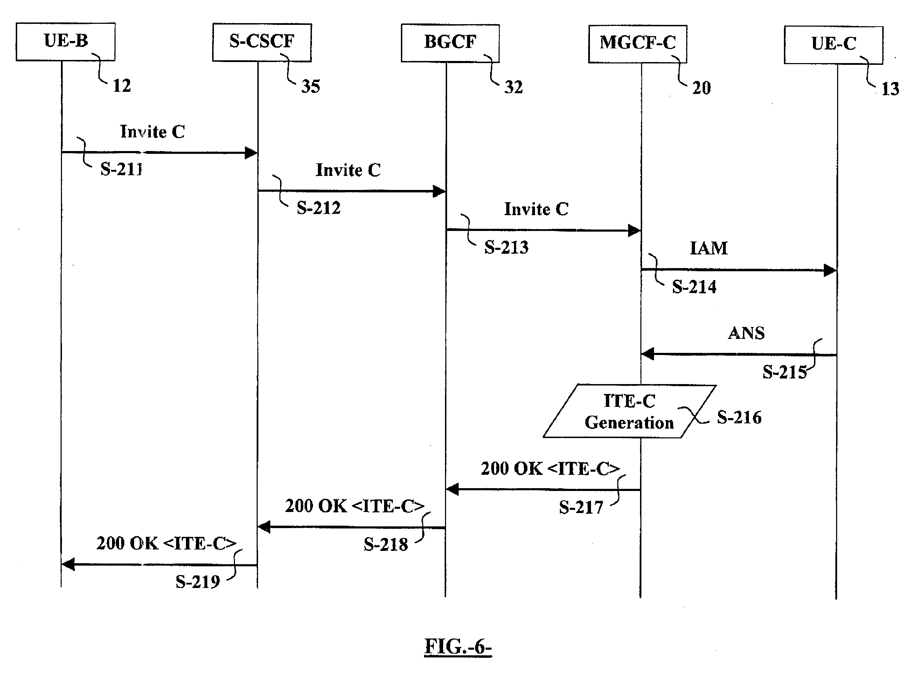

A first embodiment of the invention, illustrated in Fig. 6 with due regard to Fig. 3, presents a mechanism whereby an originating IMS subscriber 12 originates a session towards a destination subscriber 13 of a legacy network 30. This mechanism is applicable in accordance with an aspect of the invention whenever there is a session establishment request addressing a destination subscriber of a legacy destination network.

To this end, the originating IMS subscriber 12 sends during step S-211 a SIP Invite message addressing the destination subscriber 13 towards a S-CSCF 35 serving the IMS subscriber 12. This SIP Invite is routed in step S-212 towards a BGCF 32 in charge of determining the legacy destination network 30 and in charge of selecting a suitable MGCF 20 for handling the corresponding session. The selection of the MGCF may be carried out by traditional selection criteria like load sharing or geographical reasons, for example. The SIP Invite addressing the destination subscriber is then routed in step S-213 towards the selected MGCF 20 for translation between SIP to the protocol used in such legacy destination network. For the sake of simplicity, the embodiment illustrated in Fig. 6 assumes that SS7 is the protocol used in the legacy destination network and translates the SIP Invite to an Initial Address Message, "IAM", forwarded in step S-214 towards the destination subscriber 13 through the destination legacy network 30.

Upon reception of a successful response in step S-215 from the destination legacy network, the MGCF 20 generates in step S-216 a so-called terminating IMS Telephony Endpoint "ITE", this terminating ITE includes a first information field with a telephony Universal Resource Identifier "tel URI" identifying the destination subscriber, and a second information field with information usable to identify itself as the particular MGCF holding a session between the originating and destination subscribers. In accordance with another embodiment of the present invention, not illustrated in any drawing, the step S-216 of generating the terminating ITE may be carried out prior to the step S-215 of receiving the successful response, or even prior to the step S-214 of forwarding the translated invitation towards the destination subscriber. An advantage of generating the terminating ITE in a step S-216 responsive to the reception of a session establishment response from the destination legacy network is that such step would not be carried out in case any failure prevents the communication with the destination subscriber through the destination legacy network.

Regarding the generation of ITE identifiers, a first consideration to make is that only a "tel URI" is routable to a MGCF of the IMS network in accordance with standard IMS routing rules; a second consideration is that such ITE identifier is intended to identify a specific subscriber in a specific MGCF instance, and a third consideration to make is that such ITE identifier is in a form routable by the IMS network though it is not necessarily generated by an IMS entity.

The "tel URI" is defined in RFC 3966. A "tel URI" can be expressed as tel:<number>[;<parameters>]; wherein an item enclosed in square brackets is optional and can be omitted in an instance of the syntax; wherein <number> may be either a local or a global number, a global number beginning with a '+' character; and wherein <parameters> is a semi-colon separated list of items with the form <pname>="<pvalue>", being <pname> the parameter name and <pvalue> the value that the parameter with name <pname> takes. Certain sets of <pname> names are specified in RFC 3966 but the space of <pname> names is open.

A "tel URI" has a semantically equivalent SIP form, namely a SIP URI, expressed as sip:<number>[;<parameters>]@<domain>[;<sip-parameters>];user="phone"; wherein <number> and <parameters> are the basic building blocks of the tel URI as described above; wherein <domain> is a Fully Qualified Domain Name, hereinafter FQDN, that must be resolvable by means of a DNS query; and wherein <sip-parameters> is a semi-colon separated list of items with the form <pname>="<pvalue>" not related to the previously cited <parameters> element.

The present invention, however, provides for a new identifier, namely the ITE, where a piece of information is added to the "tel URI", or to its semantically equivalent SIP URI, that uniquely identifies a MGCF instance whilst at the same time preserves the capability of being routable within the IMS network.

In an embodiment of the invention, there is added a MGCF FQDN, or an IP address, as an additional parameter of the "tel URI", or to its semantically equivalent SIP URI, to generate an ITE as tel:<number>[;<parameters>];opaque="<MGCF-FQDN-or-IP-address>". Other embodiments are also possible where an identifier of a MGCF instance is added in a compatible format to the list of permissible parameters of a "tel URI" or SIP URI.

The ITE identifier shown above is routable by the IMS network using standard IMS routing rules and, at the same time, contains all the necessary information to address a specific legacy subscriber at a specific MGCF instance. In addition the above embodiment allows an IMS network entity to easily recognize the identifier as an ITE identifier by inspecting the URI parameters seeking the "opaque" parameter.

Another embodiment is also possible wherein the ITE identifier is not routable by the IMS network using standard IMS routing rules. In this embodiment, an operator could manually configure in the IMS network entities in charge of routing a set of bindings between ITE identifiers and pairs of legacy subscribers and MGCF instance, so that when one of these routing entities finds one of these identifiers, the IMS entity can know how to route it to the right MGCF instance. In this embodiment the identifier could take any form with the single restriction of uniqueness for each pair of legacy subscriber and MGCF instance. This alternative embodiment may be more cumbersome and difficult to manage than the previous embodiment proposing tel:<number>[;<parameters>];opaque="<MGCF-FQDN-or-IP-address>" as ITE identifier.

The terminating ITE thus generated is returned towards the IMS entities involved in the signalling path shown under this embodiment illustrated in Fig. 6, namely towards the BGCF in step S-217, towards the S-CSCF in step S-218, and towards the originating user 12 in step S-219. Further communications addressing such destination subscriber 13 of the legacy destination network will include the generated terminating ITE to effectively reach the destination subscriber through the appropriate MGCF 20 holding this session.

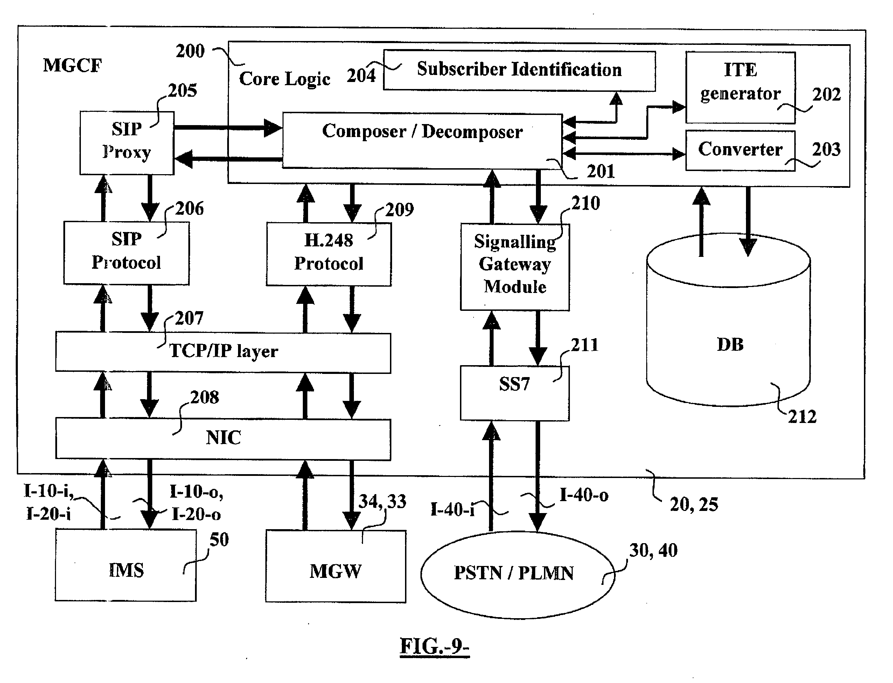

In this respect, and as illustrated in Fig. 9 with due regard to Fig. 3, the BGCF 20 inter-working with the destination legacy network 30 includes terminating input means I-10-i, 205-208 for receiving from the IMS a session establishment request addressing the destination subscriber 13 of the destination legacy network 30, the destination subscriber identified by a subscriber number; terminating processing means 201, 202 for generating the terminating ITE; and terminating output means 205-208, I-10-o for returning towards the IMS a session establishment response including the terminating ITE to identify the destination subscriber and itself as the MGCF holding the session. The terminating processing means may include a dedicated ITE generator 202, which may be arranged to also include a session identifier as a third field of information in the ITE, or as a part of the first and second fields already commented.

Moreover, the MGCF 20 may be also equipped with a converter 203 for translating the terminating ITE into a Universal Resource Identifier with semantic rules according to a Session Initiation Protocol, namely a "SIP URI". The provision of this SIP URI as terminating ITE via the terminating output means, which may be arranged to this end, is an advantageous feature that would not require any modification in those IMS entities involved in the reception and sending of the terminating TTE.

A SIP URI obtainable from translation of an ITE with semantic rules according to a Session Initiation Protocol may be expressed as sip:<number>;opaque="<MGCF-FQDN-or-IP-address">@<domain>;user="phone", in accordance with an embodiment of the present invention.

In particular, the terminating input means and the terminating output means may include a network interface card 208, hereinafter NIC, for interfacing with the IMS; a well-known TCP/IP layer 207 to convey the SIP signalling; a SIP Protocol handler 206 dealing with protocol operations and rules; and a SIP Proxy module 205 for routing SIP messages. In addition, the MGCF includes traditional features carried out by a core logic 200 with help of a context and terminations database 212, such as triggering control signalling towards a MGW 34 via an H.248 Protocol handler 209, which in turn encapsulates such signalling for submission through the TCP/IP layer 207 and NIC 208. The IMS entity where the session establishment request is received from, and where the session establishment response is returned to, may be the BGCF 32, especially where more than one MGCF 20, 21, 22 exists.

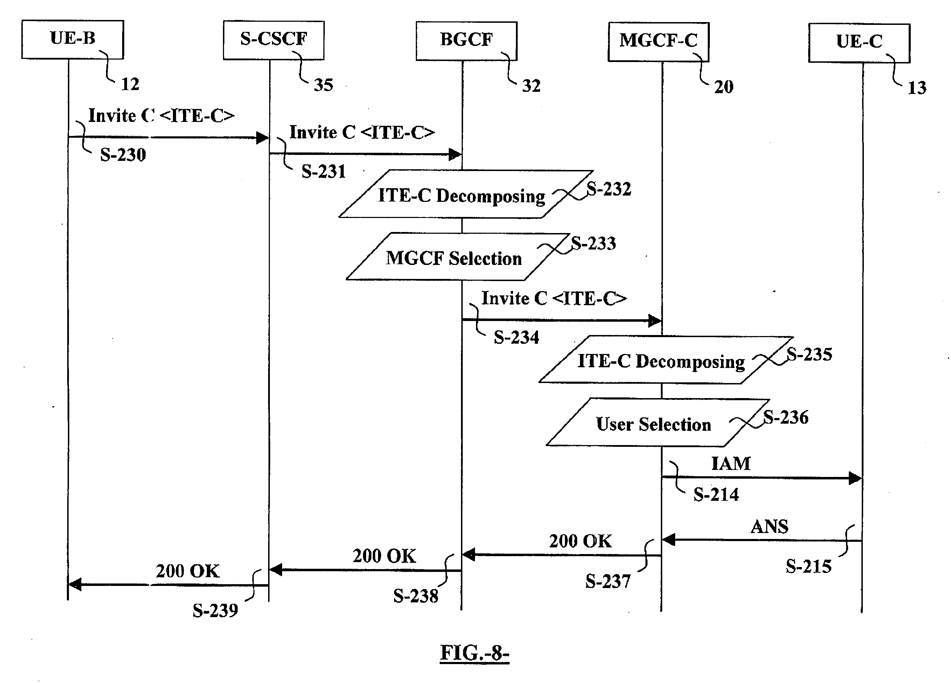

Regarding the replacement of sessions under session referral services, Fig. 8 with due regard to Fig. 3 illustrates how a further communication involving the same destination subscriber, for the purpose of an exemplary call transfer, is carried out in accordance with an embodiment of the invention. Thus, the originating SIP subscriber 12 originates in step S-230 a new session towards the destination subscriber 13 of the legacy network 30 in order to request the call transfer, the request traditionally including a reference to a third party where the call is going to be transferred, and now also including the terminating ITE assigned when the session between the previous originating and the destination subscribers was established. This request is received at the S-CSCF 35 assigned by the IMS network for servicing the SIP subscriber 12 and, found to address a destination subscriber of a legacy network, is submitted in step S-231 towards the BGCF 32 for selection of an appropriate MGCF. The BGCF receiving the request with a terminating ITE extracts in step S-232 the second information field, and determines in step S-233 the particular MGCF in charge of a currently established session between such originating and destination subscribers. The BGCF 32 then submits the received request addressing the ITE towards the particular MGCF 20 in step-234.

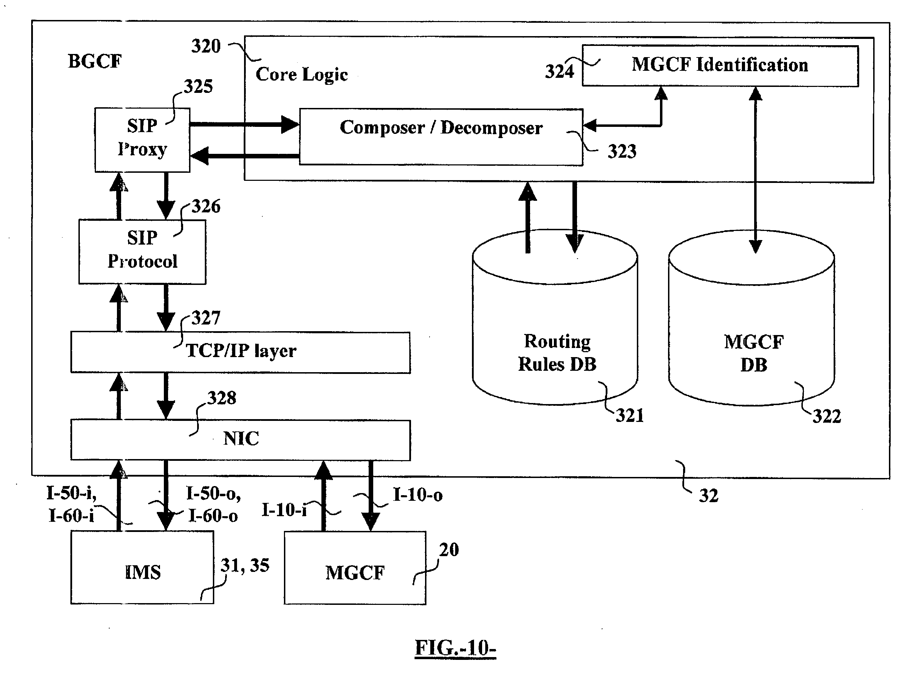

To this end, as Fig. 10 illustrates with due regard to Fig. 3, the BGCF 32 includes means 1-60-i, 325-328 for receiving a message addressing an IMS Telephony Endpoint "ITE", the ITE including a first information field with a telephony Universal Resource Identifier "tel URI" identifying the destination subscriber, and a second information field with information usable to identify the particular MGCF 20 holding a previous session for such destination subscriber; a decomposer 323 for extracting the second information field and for determining the particular MGCF 20, possibly with help of a separate MGCF Identification module 324; and means I-10-o, 325-328 for submitting the received message addressing the ITE towards the particular MGCF 20 for further processing therein. In particular, the BGCF 32 may include mapping means 322, 324 for mapping the information included in the second information field and an identifier usable to determine the particular MGCF (20).

Back to the sequence of actions illustrated in Fig. 8 with due regard to Fig. 3, the MGCF receiving such request in step S-234 with the terminating ITE extracts the first information field in step S-235, and determines in step S-236 the particular destination subscriber. Once the received SIP message is translated into a corresponding message for the protocol used by the legacy network, the translated call transfer request is submitted in step S-214 towards the destination subscriber 13 through the destination legacy network 30. As before, no impact is expected at the legacy network from the introduction of the ITE related features in the IMS network. Upon reception of a successful answer from the destination legacy network, the MGCF 20 can replace the present session established between the originating SIP subscriber 12 and the destination subscriber 13 of a legacy network by a new session between the above third party and the same destination subscriber 13. Upon successful replacement of sessions, the call transfer is successfully accomplished and thus indicated backwards in steps S-237 to the BGCF, in step S-238 to the S-CSCF, and in step S-239 to the previously originating SIP subscriber 12 who triggered the call transfer.

For this purpose, as illustrated in Fig. 9 with due regard to Fig. 3, the MGCF 20 may also include second terminating input means for receiving the message addressing the terminating ITE, or make use of the above terminating input means I-10-i, 205-208 with an additional subscriber identification module 204 enabled to identify the subscriber irrespective of being indicated with a "tel URI", an ITE, or a subscriber number; and a decomposer 201 for extracting the first information field and for determining the particular destination subscriber with help of such subscriber identification module 204. Moreover, the MGCF 20 may include means 205-208, I-10-o for indicating towards the BGCF 32 the successful completion of session referral service by replacing the old session with the new one. Aligned with this mechanism; and as illustrated in Fig. 10, the BGCF 32 may include means 325-328, I-10-i for receiving from the MGCF 20 the indication of successful completion of session referral service, and means 325-328, I-60-o for confirming towards the S-CSCF 35 such successful completion of session referral service. The operation of the NIC 208, 328, for interfacing with the IMS; the TCP/IP layer 207, 327 to convey the SIP signalling; the SIP Protocol handler 206, 326 dealing with protocol operations and rules; and the SIP Proxy module 205, 325 in both MGCF and BGCF, and for this particular purpose, does not require further information for those skilled in the art.

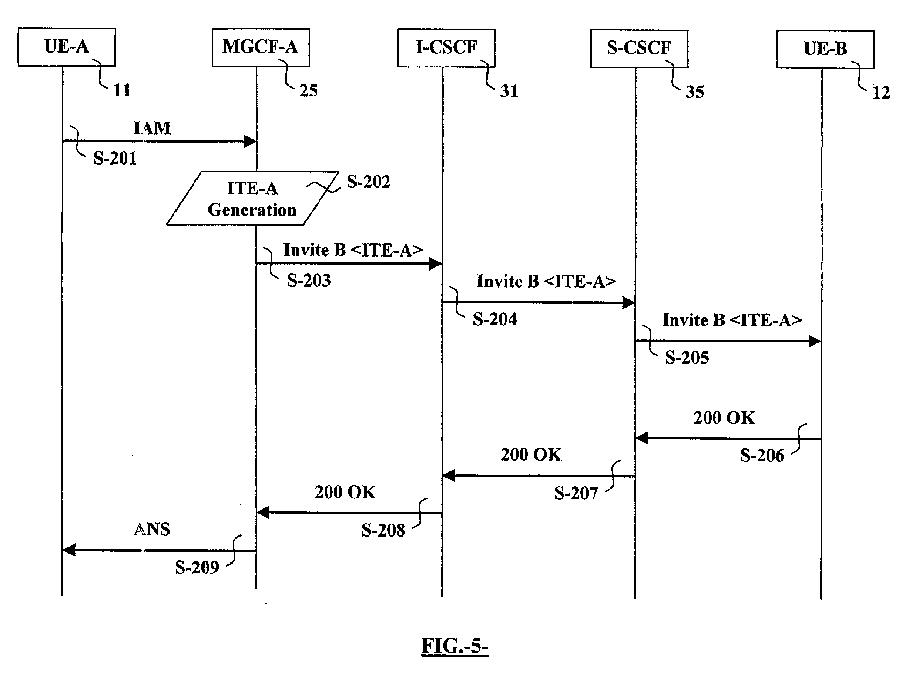

A second embodiment of the invention, illustrated in Fig. 5 with due regard to Fig. 3, presents a mechanism whereby an originating subscriber 11 of an originating legacy network 40 originates a session towards a destination IMS subscriber 12. This mechanism is applicable in accordance with an aspect of the invention whenever there is a session establishment request originated by an originating subscriber of an originating legacy network.

To this end, the originating subscriber 11 sends during step S-201 an Initial Address Message, hereinafter IAM, through the originating legacy network, and addressing the destination IMS subscriber 12. This message is received at a MGCF 25 serving the originating legacy network and which translates such message to a corresponding SIP Invite message with traditional translation means included in core logic 200 of the MGCF in order to indicate a session establishment request to the destination IMS subscriber 12. However, in accordance with this embodiment of the invention, the MGCF 25 generates in step S-202 an originating IMS Telephony Endpoint "ITE", the originating ITE including a first information field with a telephony Universal Resource Identifier "tel URI" identifying the originating subscriber 11, and a second information field with information usable to identify itself as the particular MGCF 25 holding the session between the originating and destination subscribers. Then, the MGCF 25 forwards in step S-203 towards the IMS the session establishment request including the originating ITE generated to identify the originating subscriber 11 and the MGCF 25 holding the session.

To this end, as Fig. 9 illustrates with due regard to Fig. 3, the MGCF 25 inter-working with the originating legacy network 40 includes originating input means I-40-i, 210-211 for receiving from the originating subscriber 11 of the originating legacy network 40 a session establishment request addressing the destination IMS subscriber 12, the originating subscriber identified by a subscriber number; originating processing means 201, 202 for generating the originating ITE; and originating output means 205-208, I-20-o for forwarding towards the IMS the session establishment request including the originating ITE to identify the originating subscriber and itself as the MGCF holding the session. The originating processing means may include a dedicated ITE generator 202, which may be arranged to also include a session identifier as a third field of information in the ITE, or as a part of the first and second fields already commented. As for the MGCF 20 inter-working with the destination 30 legacy network, also in this MGCF 25 inter-working with the originating legacy network 40 the operation of the NIC 208 for interfacing with the IMS; the TCP/IP layer 207 to convey the SIP signalling; the SIP Protocol handler 206 dealing with protocol operations and rules; and the SIP Proxy module 205, and for this particular purpose, does not require further information for those skilled in the art.

In addition, the MGCF 25 may be also equipped with the converter 203 for translating the originating ITE into a Universal Resource Identifier with semantic rules according to a Session Initiation Protocol, namely a "SIP URI". The provision of this SIP URI as originating ITE via the originating output means, which may be arranged to this end, is also an advantageous feature that would not require any modification in those IMS entities involved in the reception and sending of the originating ITE.

Back to the sequence of actions illustrated in Fig. 5, this session establishment request including the originating ITE is received in an I-CSCF 31 of the IMS, which inquires a Home Subscriber Server not shown in any drawing about an S-CSCF 35 currently serving the destination IMS subscriber 12. Upon receipt of such information the I-CSCF 31 forwards in step S-204 the session establishment request with the originating ITE towards the S-CSCF 35. The S-CSCF 35, on its own, forwards in step S-205 the session establishment request with the originating ITE towards the destination IMS subscriber 12, wherein the originating ITE is stored in the user equipment for further communications, likely related to a referral service request such as call transfer.

For this purpose, a user equipment of an IMS subscriber 12 that traditionally comprises means for sending and receiving a session establishment request to and from the IMS 50, and means for receiving and sending a successful session establishment response from and to the IMS, also comprises in accordance with some embodiments of the invention means for receiving an IMS Telephony Endpoint "ITE", the ITE including a first information field with a telephony Universal Resource Identifier "tel URI" identifying an end subscriber 11 with whom a session has been established, and a second information field with information usable to identify a particular MGCF 20, 25 holding the session.

Eventually, a session establishment response is returned in step S-206 from the destination IMS subscriber towards the S-CSCF 35, then towards the I-CSCF 31 in step S-207, then towards the MGCF 25 in step S-208 wherein the session establishment response is translated to the appropriate answer in accordance with the protocol used by the originating legacy network 40, and the answer returned in step S-209 from the MGCF 25 to the originating user 11 of the originating legacy network.

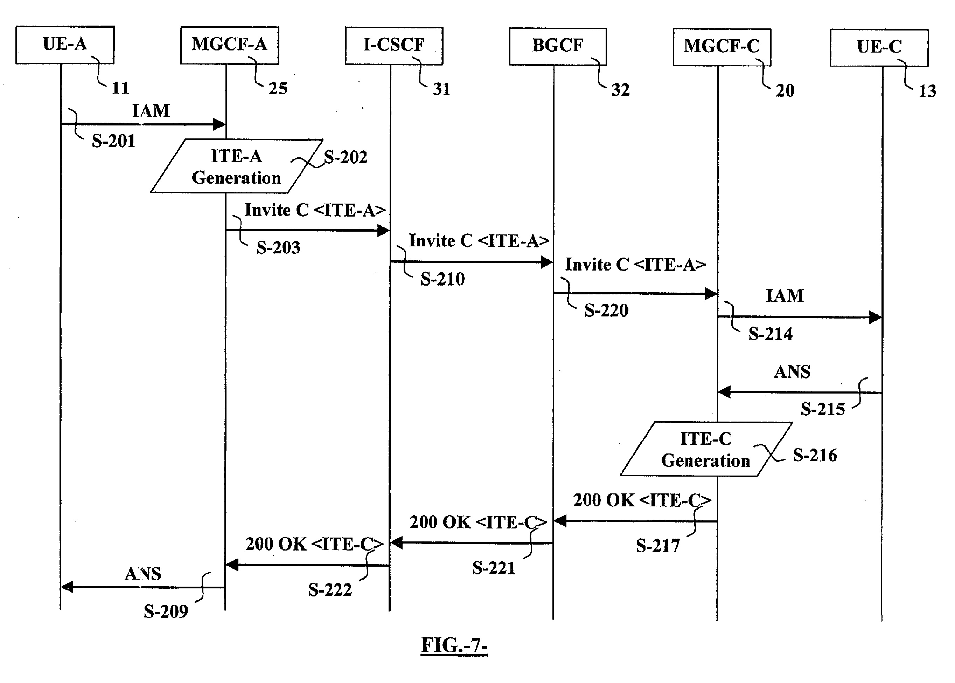

A third embodiment of the invention, illustrated in Fig. 7 with due regard to Fig. 3, 5 and 6, presents a mechanism whereby an originating subscriber 11 of an originating legacy network 40 originates a session towards a destination subscriber 13 of a legacy network 30. This mechanism includes common features with the two above embodiments, that is, common features with the above first embodiment at the terminating part and common features with the above second embodiment at the originating part.

In this third embodiment, the originating subscriber 11 sends during step S-201 an Initial Address Message, hereinafter IAM, through the originating legacy network, and addressing a destination subscriber 13 of a legacy network 30. This message is received at a MGCF 25 serving the originating legacy network and which translates such message to a corresponding SIP Invite message with traditional translation means included in a core logic 200 of the MGCF in order to indicate a session establishment request to the destination subscriber 13. Also in accordance with this embodiment of the invention, the MGCF 25 generates in step S-202 an originating IMS Telephony Endpoint "ITE", the originating ITE including a first information field with a telephony Universal Resource Identifier "tel URI" identifying the originating subscriber 11, and a second information field with information usable to identify itself as the particular MGCF 25 holding the session between the originating and destination subscribers. Then, the MGCF 25 forwards in step S-203 towards the IMS the session establishment request including the originating ITE generated to identify the originating subscriber 11 and the MGCF 25 holding the session. To this end, the MGCF 25 may include similar elements as referred above for the second embodiment, and illustrated in Fig. 9.

This session establishment request including the originating ITE is received in an I-CSCF 31 of the IMS, which detects that the destination subscriber 13 is a subscriber of a legacy destination network 30, and forwards in step S-210 the session establishment request with the originating ITE towards a BGCF 32 serving such legacy destination network 30. The BGCF 32 receives the session establishment request including the originating ITE and, as detecting that the destination subscriber is not addressed by a terminating ITE but by a destination subscriber number, selects an appropriate MGCF with traditional criteria such as load sharing or others to handle the session for such originating and destination subscribers as for the above first embodiment. Then, the session establishment request including the originating ITE and addressing the destination subscriber 13 is forwarded in step S-220 towards the selected MGCF 20 for translation between SIP to the protocol used in such legacy destination network, and the translated message is forwarded in step S-214 towards the destination subscriber 13 through the destination legacy network 30.

Upon reception of a successful response in step S-215 from the destination legacy network, the MGCF 20 generates in step S-216 a terminating IMS Telephony Endpoint "ITE", this terminating ITE including a first information field with a telephony Universal Resource Identifier "tel URI" identifying the destination subscriber, and a second information field with information usable to identify itself as the particular MGCF holding a session between the originating and destination subscribers. As indicated for the first embodiment and not illustrated in any drawing, the step S-216 of generating the terminating ITE may be carried out prior to the step S-215 of receiving the successful response, or even prior to the step S-214 of forwarding the translated invitation towards the destination subscriber. An advantage of generating the terminating ITE in a step S-216 responsive to the reception of a session establishment response from the destination legacy network is that such step would not be carried out in case any failure prevents the communication with the destination subscriber through the destination legacy network.

Eventually, the terminating ITE is returned towards the IMS entities involved in the signalling path shown under this embodiment, namely towards the BGCF in step S-217, towards the I-CSCF in step S-221, towards the MGCF 25 inter-working with the originating legacy network 40 in step S-222 and, after translation at the MGCF 25, towards the originating user 11 in step S-209.

Also for this purpose, the MGCF 20 inter-working with the destination legacy network 30 and the BGCF 32 may include similar elements as those referred above for the first embodiment, and illustrated in Fig. 9 and Fig. 10 respectively. In addition, both MGCF 20, 25 and BGCF. 32, as well as the I-CSCF 31 of the IMS, include means to differentiate and handle separately the originating ITE and the terminating ITE so that, for example, the BGCF 32 handles appropriately the originating ITE received in step S-210 and the terminating ITE received in step S-217.

Regarding implementation of embodiments, the invention can be realized by a computer program, which is loadable into an internal memory of a computer that includes input and output units as well as a processing unit. This computer program comprises executable software portions adapted to carry out sequence of actions described under the above embodiments when running in the computer. In particular, the computer program may be recorded in a carrier computer-readable medium, such as a CD-ROM.

The invention is described above in respect of several embodiments in an illustrative and non-restrictive manner. Obviously, variations, and combinations of these embodiments are possible in light of the above teachings, and any modification of the embodiments that fall within the scope of the claims is intended to be included therein.

## Claims

1. A Media Gateway Control Function device (20), "MGCF", for routing through an IP Multimedia Subsystem "IMS" (50) a session establishment request originated from an originating subscriber (11, 12) and addressing a destination subscriber (13) of a destination legacy network (30), the MGCF having:
- terminating input means (1-10-i, 205-208) for receiving from the IMS a session establishment request addressing a destination subscriber of a destination legacy network, the destination subscriber identified by a subscriber number;
and **characterised in that** it also comprises:
- terminating processing means (201, 202) for generating a terminating IMS Telephony Endpoint "ITE", the terminating ITE including a first information field with a telephony Universal Resource Identifier "tel URI" identifying the destination subscriber (13), and a second information field with information usable to identify itself as the particular MGCF (20) holding a session between the originating and destination subscribers; and
- terminating output means (205-208, I-10-o) for returning towards the IMS a session establishment response including the terminating ITE to identify the destination subscriber and itself as the MGCF holding the session.

2. The MGCF of claim 1, wherein the generation of the terminating ITE is responsive to the reception (S-215) of a session establishment response from the destination legacy network (30) to be returned to the IMS.

3. The MGCF of claim 2, wherein the session establishment response is returned towards a Breakout Gateway Control Function device (32) of the IMS, "BGCF", suitable for locating an optimum Media Gateway Control Function device "MGCF" to hold a session between the originating and destination subscribers.

4. The MGCF of claim 1, wherein the ITE further includes an identifier to identify the session.

5. The MGCF of claim 1, further comprising a converter (203) for translating the terminating ITE into a Universal Resource Identifier with semantic rules according to a Session Initiation Protocol, a "SIP URI".

6. The MGCF of claim 5, wherein the terminating output means are arranged to provide the SIP URI as terminating ITE.

7. The MGCF of claim 1, further comprising:
- second terminating input means (204-208, I-10-i) for receiving a message addressing the terminating ITE; and
- a decomposer (201) for extracting the first information field and for determining the particular destination subscriber.

8. A Media Gateway Control Function device (25), "MGCF", for routing through an IP Multimedia Subsystem "IMS" (50) a session establishment request received from an originating subscriber (11) of an originating legacy network (40) and addressing a destination subscriber (12, 13), the MGCF having:
- originating input means (I-40-i, 210-211) for receiving from an originating subscriber of an originating legacy network a session establishment request addressing a destination subscriber, the originating subscriber (11) identified by a subscriber number;
and **characterised in that** it also comprises:
- originating processing means (201, 202) for generating an originating IMS Telephony Endpoint "ITE", the originating ITE including a first information field with a telephony Universal Resource Identifier "tel URI" identifying the originating subscriber (11), and a second information field with information usable to identify itself as the particular MGCF (25) holding a session between the originating and destination subscribers; and
- originating output means (205-208, I-20-o) for forwarding towards the IMS the session establishment request including the originating ITE to identify the originating subscriber and itself as the MGCF holding the session.

9. The MGCF of claim 8, wherein the session establishment request is forwarded towards an Interrogating Call Session Control Function device (31) of the IMS, "I-CSCF", suitable for determining a routing path towards the destination subscriber.

10. The MGCF of claim 8, wherein the ITE further includes an identifier to identify the session.

11. The MGCF of claim 8, further comprising a converter (203) for translating the originating ITE into a Universal Resource Identifier with semantic rules according to a Session Initiation Protocol, a "SIP URI".

12. The MGCF of claim 11, wherein the originating output means are arranged to provide the SIP URI as originating ITE.

13. A Breakout Gateway Control Function device (32), "BGCF", for locating an optimum Media Gateway Control Function device "MGCF" to route a session
- establishment request originated from an originating subscriber (11) and received in an IP Multimedia Subsystem "IMS" towards a destination subscriber (13), the BGCF having:
- means (322, 324) for addressing more than one MGCF (20, 21, 22, 25);
and **characterised in that** it also comprises:
- means (I-60-i, 325-328) for receiving a message addressing an IMS Telephony Endpoint "ITE", the ITE including a first information field with a telephony Universal Resource Identifier "tel URI" identifying a subscriber (11, 13), and a second information field with information usable to identify a particular MGCF (20, 25);
- a decomposer (323, 324) for extracting the second information field and for determining the particular MGCF (20); and
- means (I-10-o, 325-328) for submitting the received message addressing the ITE towards the particular MGCF (20).

14. The BGCF of claim 13, further comprising means for routing messages addressing a telephony Universal Resource Identifier "tel URI".

15. The BGCF of claim 13, further comprising means for differentiating whether a received ITE is an originating ITE identifying an originating subscriber (11) of an originating legacy network (40), or a terminating ITE identifying a destination subscriber (13) of a destination legacy network (30).

16. The BGCF of claim 13, further including mapping means (322, 324) for mapping the information included in the second information field and an identifier usable to determine the particular MGCF (20).

17. A method for routing through an IP Multimedia Subsystem (50), "IMS", a session establishment request originated by an originating subscriber (11, 12) and addressing a destination subscriber (13) of a destination legacy network (30), the method comprising a step of:
- receiving (S-213) at a Media Gateway Control Function device (20) "MGCF" from the IMS (32) a session establishment request addressing a destination subscriber (13) of a destination legacy network (30), the destination subscriber identified by a subscriber number;
and **characterised in that** it also comprises the steps of:
- generating (S-216) at the MGCF a terminating IMS Telephony Endpoint "ITE", the terminating ITE including a first information field with a telephony Universal Resource Identifier "tel URI" identifying the destination subscriber, and a second information field with information usable to identify the MGCF (20) as the particular MGCF holding a session between the originating and destination subscribers; and
- returning (S-217) towards the IMS a session establishment response including the terminating ITE to identify the destination subscriber and itself as the MGCF holding the session.

18. The method of claim 17, wherein the step of generating the terminating ITE is responsive to a step (S-215) of receiving at the MGCF a session establishment response from the destination legacy network to be returned to the IMS.

19. The method of claim 17, further including the steps of:
- sending (S-214) from the MGCF the session establishment request with the destination subscriber number towards the destination legacy network; and
- receiving (S-215) at the MGCF a session establishment response from the destination legacy network to be returned to the IMS.

20. The method of claim 17, wherein the session establishment response is returned towards a Breakout Gateway Control Function device (32) of the IMS, "BGCF", suitable for locating an optimum Media Gateway Control Function device "MGCF" to hold a session between the originating and destination subscribers.

21. The method of claim 17, further comprising a step of translating the terminating ITE into a Universal Resource Identifier with semantic rules according to a Session Initiation Protocol, a "SIP URI" to be returned towards the IMS as terminating ITE.

22. The method of claim 17, further comprising the steps of:
- receiving (S-234) at the MGCF a message addressing the terminating ITE;
- extracting (S-235) the first information field; and
- determining (S-236) the particular destination subscriber.

23. The method of claim 17, further comprising a step of mapping the information included in the second information field and an identifier usable to determine the particular MGCF (20).

24. The method of claim 17, further comprising the steps of:
- receiving (S-231) at a BGCF (32) a message addressing the terminating "ITE", the ITE including a first information field with a telephony Universal Resource Identifier "tel URI" identifying a destination subscriber, and a second information field with information usable to identify a particular MGCF (20);
- extracting (S-232, S-233) the second information field to determine the particular MGCF (20); and
- submitting (S-234) the received message addressing the ITE towards the particular MGCF (20).

25. A method for routing through an IP Multimedia Subsystem (50), "IMS", a session establishment request received from an originating subscriber (11) of an originating legacy network (40) and addressing a destination subscriber (12, 13), the method comprising a step of:
- receiving (S-201) at a Media Gateway Control Function device (25), "MGCF", from the originating subscriber (11) a session establishment request addressing a destination subscriber (12, 13), the originating subscriber identified by a subscriber number;
and **characterised in that** it also comprises the steps of:
- generating (S-202) at the MGCF an originating IMS Telephony Endpoint "ITE", the originating ITE including a first information field with a telephony Universal Resource Identifier "tel URI" identifying the originating subscriber, and a second information field with information usable to identify the MGCF (25) as the particular MGCF holding a session between the originating and destination subscribers; and
- forwarding (S-203) towards the IMS (31) the session establishment request including the originating ITE to identify the originating subscriber and the MGCF holding the session.

26. The method of claim 25, wherein the session establishment request is forwarded towards an Interrogating Call Session Control Function device (31), "I-CSCF", of the IMS (50) suitable for determining a routing path towards the destination subscriber (12, 13).

27. The method of claim 25, further comprising a step of translating the originating ITE into a Universal Resource Identifier with semantic rules according to a Session Initiation Protocol, a "SIP URI" to be forwarded towards the IMS as originating ITE.

28. The method of claim 25, further comprising a step of mapping the information included in the second information field and an identifier usable to determine the particular MGCF (25).

29. The method of claim 25, further comprising the steps of:
- receiving (I-20-i) at the MGCF (25) a message addressing the originating ITE;
- extracting the first information field to determine the particular originating subscriber; and
- submitting (I-20-o) the message towards the originating legacy network (40).

30. A user equipment (12) for accessing an IP Multimedia Subsystem (50), "IMS", comprising means for sending and receiving a session establishment request to and from the IMS, and means for receiving and sending a successful session establishment response from and to the IMS, and **characterized in that** it further comprises means for receiving (S-205) an IMS Telephony Endpoint "ITE", the ITE including a first information field with a telephony Universal Resource Identifier "tel URI" identifying an end subscriber with whom a session has been established, and a second information field with information usable to identify a particular Media Gateway Control Function device (20, 25), "MGCF" holding the session, wherein the user equipment is adapted to store this ITE and to include this ITE in further communications with this end subscriber.

31. A computer program, loadable into an internal memory of a computer with input and output units as well as with a processing unit, the computer program comprising executable software adapted to carry out the method steps according to any of claims 17 to 29 when running in the computer.

32. A carrier readable in a computer, wherein the executable software comprised in the computer program of claim 31 is recorded in this carrier readable in a computer.

## Patentansprüche

1. Media Gateway Control Function-Einrichtung (20), "MGCF", zum Weiterleiten einer Sitzungsherstellungsanforderung, die von einem Ursprungsteilnehmer (11, 12) stammt, über ein IP Multimedia Subsystem "IMS" (50) und Ansprechen eines Zielteilnehmers (13) eines existierenden Zielnetzes (30), wobei die MGCF aufweist:
- ein Terminierungseingabemittel (I-10-i, 205-208) zum Empfangen einer Sitzungsherstellungsanforderung, die einen Zielteilnehmer eines existierenden Zielnetzes anspricht, von dem IMS, wobei der Zielteilnehmer durch eine Teilnehmernummer identifiziert ist;
und ferner **gekennzeichnet durch**:
- ein Terminierungsverarbeitungsmittel (201, 202) zum Erzeugen eines Terminierungs-IMS Telephony Endpoint "Terminierungs-ITE", wobei der Terminierungs-ITE ein erstes Informationsfeld mit einem Telefonie-Universal Resource Identifier "Tel-URI", der den Zielteilnehmer (13) identifiziert, und ein zweites Informationsfeld mit einer Information, die verwendet werden kann, um sich selbst als die bestimmte MGCF (20) zu identifizieren, die eine Sitzung zwischen dem Ursprungs- und dem Zielteilnehmer aufrecht erhält, umfasst; und
- ein Terminierungsausgabemittel (205-208, I-10-o) zum Zurückgeben einer Sitzungsherstellungsantwort, die den Terminierungs-ITE umfasst, an das IMS, um den Zielteilnehmer und sich selbst als die MGCF, die die Sitzung aufrecht erhält, zu identifizieren.

2. MGCF nach Anspruch 1,
wobei die Erzeugung des Terminierungs-ITE in Ansprechen auf den Empfang (S-215) einer Sitzungsherstellungsantwort von dem existierenden Zielnetz (30) für eine Rückgabe an das IMS erfolgt.

3. MGCF nach Anspruch 2,
wobei die Sitzungsherstellungsantwort an eine Breakout Gateway Control Function-Einrichtung (32) des IMS, "BGCF", zurückgegeben wird, die geeignet ist, um eine optimale Media Gateway Control Function-Einrichtung "MGCF" zum Aufrechterhalten einer Sitzung zwischen dem Ursprungs- und dem Zielteilnehmer festzulegen.

4. MGCF nach Anspruch 1,
wobei der ITE ferner einen Identifikator umfasst, um die Sitzung zu identifizieren.

5. MGCF nach Anspruch 1,
ferner umfassend einen Wandler (203), um den Terminierungs-ITE mit Semantikregeln gemäß einem Session Initiation Protocol in einen Universal Resource Identifier, einen "SIP URI", zu übersetzen.

6. MGCF nach Anspruch 5,
wobei das Terminierungsausgabemittel angeordnet ist, um den SIP URI als Terminierungs-ITE bereitzustellen.

7. MGCF nach Anspruch 1, ferner umfassend:
- ein zweites Terminierungseingabemittel (204-208, I-10-i) zum Empfangen einer Nachricht, die den Terminierungs-ITE anspricht; und
- eine Zerlegungseinheit (201) zum Extrahieren des ersten Informationsfelds und zum Ermitteln des bestimmten Zielteilnehmers.

8. Media Gateway Control Function-Einrichtung (25), "MGCF", zum Weiterleiten einer Sitzungsherstellungsanforderung, die von einem Ursprungsteilnehmer (11) eines existierenden Ursprungsnetzes (40) empfangen wird, über ein IP Multimedia Subsystem "IMS" (50) und Ansprechen eines Zielteilnehmers (12, 13), wobei die MGCF aufweist:
- ein Ursprungseingabemittel (I-40-i, 210-211) zum Empfangen einer Sitzungsherstellungsanforderung, die einen Zielteilnehmer anspricht, von einem Ursprungsteilnehmer eines existierenden Ursprungsnetzes, wobei der Ursprungsteilnehmer (11) durch eine Teilnehmernummer identifiziert ist;
und ferner **gekennzeichnet durch**:
- ein Ursprungsverarbeitungsmittel (201, 202) zum Erzeugen eines Ursprungs-IMS Telephony Endpoint "Ursprungs-ITE", wobei der Ursprungs-ITE ein erstes Informationsfeld mit einem Telefonie-Universal Resource Identifier "Tel-URI", der den Ursprungsteilnehmer (11) identifiziert, und ein zweites Informationsfeld mit einer Information, die verwendet werden kann, um sich selbst als die bestimmte MGCF (25) zu identifizieren, die eine Sitzung zwischen dem Ursprungs- und dem Zielteilnehmer aufrecht erhält, umfasst; und
- ein Ursprungsausgabemittel (205-208, I-20-o) zum Übermitteln der Sitzungsherstellungsanforderung, die den Ursprungs-ITE umfasst, an das IMS, um den Ursprungsteilnehmer und sich selbst als die MGCF, die die Sitzung aufrecht erhält, zu identifizieren.

9. MGCF nach Anspruch 8,
wobei die Sitzungsherstellungsanforderung an eine Interrogating Call Session Control Function-Einrichtung (31) des IMS, "I-CSCF", übermittelt wird, die geeignet ist, um einen Weiterleitungspfad zu dem Zielteilnehmer zu ermitteln.

10. MGCF nach Anspruch 8,
wobei der ITE ferner einen Identifikator umfasst, um die Sitzung zu identifizieren.

11. MGCF nach Anspruch 8,
ferner umfassend einen Wandler (203), um den Ursprungs-ITE mit Semantikregeln gemäß einem Session Initiation Protocol in einen Universal Resource Identifier, einen "SIP URI", zu übersetzen.

12. MGCF nach Anspruch 11,
wobei das Ursprungsausgabemittel angeordnet ist, um den SIP URI als Ursprungs-ITE bereitzustellen.

13. Breakout Gateway Control Function-Einrichtung (32), "BGCF", zum Festlegen einer optimalen Media Gateway Control Function-Einrichtung "MGCF", um eine Sitzungsherstellungsanforderung, die von einem Ursprungsteilnehmer (11) stammt und in einem IP Multimedia Subsystem "IMS" empfangen wird, an einen Zielteilnehmer (13) weiterzuleiten, wobei die BGCF aufweist:
- ein Mittel (322, 324) zum Ansprechen von mehr als einer MGCF (20, 21, 22, 25);
und ferner **gekennzeichnet durch**:
- ein Mittel (I-60-i, 325-328) zum Empfangen einer Nachricht, die einen IMS Telephony Endpoint "ITE" anspricht, wobei der ITE ein erstes Informationsfeld mit einem Telefonie-Universal Resource Identifier "Tel-URI", der einen Teilnehmer (11, 13) identifiziert, und ein zweites Informationsfeld mit einer Information, die verwendet werden kann, um eine bestimmte MGCF (20, 25) zu identifizieren, umfasst;
- eine Zerlegungseinrichtung (323, 324) zum Extrahieren des zweiten Informationsfelds und zum Ermitteln der bestimmten MGCF (20); und
- ein Mittel (I-10-o, 325-328), um die empfangene Nachricht, die den ITE anspricht, der bestimmten MGCF (20) zuzusenden.

14. BGCF nach Anspruch 13,
ferner umfassend ein Mittel zum Weiterleiten von Nachrichten, die einen Telefonie-Universal Resource Identifier "Tel-URI" ansprechen.

15. BGCF nach Anspruch 13,
ferner umfassend ein Mittel zum Unterscheiden, ob ein empfangener ITE ein Ursprungs-ITE, der einen Ursprungsteilnehmer (11) eines existierenden Ursprungsnetzes (40) identifiziert, oder ein Terminierungs-ITE, der einen Zielteilnehmer (13) eines existierenden Zielnetzes (30) identifiziert, ist.

16. BGCF nach Anspruch 13,
ferner umfassend ein Zuordnungsmittel (322, 324) zum Zuordnen der Information, die in dem zweiten Informationsfeld umfasst ist, und eines Identifikators, der verwendet werden kann, um die bestimmte MGCF (20) zu ermitteln.

17. Verfahren zum Weiterleiten einer Sitzungsherstellungsanforderung, die von einem Ursprungsteilnehmer (11, 12) stammt, über ein IP Multimedia Subsystem (50), "IMS", und Ansprechen eines Zielteilnehmers (13) eines existierenden Zielnetzes (30), wobei das Verfahren den Schritt umfasst, dass:
- an einer Media Gateway Control Function-Einrichtung (20) "MGCF" von dem IMS (32) eine Sitzungsherstellungsanforderung empfangen wird (S-213), die einen Zielteilnehmer (13) eines existierenden Zielnetzes (30) anspricht, wobei der Zielteilnehmer durch eine Teilnehmernummer identifiziert ist;
und **dadurch gekennzeichnet, dass** auch die Schritte umfasst sind, dass:
- an der MGCF ein Terminierungs-IMS Telephony Endpoint "Terminierungs-ITE" erzeugt wird (S-216), wobei der Terminierungs-ITE ein erstes Informationsfeld mit einem Telefonie-Universal Resource Identifier "Tel-URI", der den Zielteilnehmer identifiziert, und ein zweites Informationsfeld mit einer Information, die verwendet werden kann, um die MGCF (20) als die bestimmte MGCF zu identifizieren, die eine Sitzung zwischen dem Ursprungs- und dem Zielteilnehmer aufrecht erhält, umfasst; und
- an das IMS eine Sitzungsherstellungsantwort zurückgegeben wird (S-217), die den Terminierungs-ITE umfasst, um den Zielteilnehmer und sich selbst als die MGCF, die die Sitzung aufrecht erhält, zu identifizieren.

18. Verfahren nach Anspruch 17,
wobei der Schritt des Erzeugens des Terminierungs-ITE in Ansprechen auf einen Schritt (S-215) des Empfangens einer Sitzungsherstellungsantwort an der MGCF von dem existierenden Zielnetz für eine Rückgabe an das IMS erfolgt.

19. Verfahren nach Anspruch 17, das ferner die Schritte umfasst, dass:
- von der MGCF die Sitzungsherstellungsanforderung mit der Zielteilnehmernummer an das existierende Zielnetz gesendet wird (S-214); und
- an der MGCF eine Sitzungsherstellungsantwort von dem existierenden Zielnetz für eine Rückgabe an das IMS empfangen wird (S-215).

20. Verfahren nach Anspruch 17,
wobei die Sitzungsherstellungsantwort an eine Breakout Gateway Control Function-Einrichtung (32) des IMS, "BGCF", zurückgegeben wird, die geeignet ist, um eine optimale Media Gateway Control Function-Einrichtung "MGCF" zum Aufrechterhalten einer Sitzung zwischen dem Ursprungs- und dem Zielteilnehmer festzulegen.

21. Verfahren nach Anspruch 17,
ferner umfassend den Schritt, dass der Terminierungs-ITE mit Semantikregeln gemäß einem Session Initiation Protocol in einen Universal Resource Identifier, einen "SIP URI", für eine Rückgabe an das IMS als Terminierungs-ITE übersetzt wird.

22. Verfahren nach Anspruch 17, ferner umfassend die Schritte, dass:
- an der MGCF eine Nachricht empfangen wird (S-234), die den Terminierungs-ITE anspricht;
- das erste Informationsfeld extrahiert wird (S-235); und
- der bestimmte Zielteilnehmer ermittelt wird (S-236).

23. Verfahren nach Anspruch 17,
ferner umfassend den Schritt des Zuordnens der Information, die in dem zweiten Informationsfeld umfasst ist, und eines Identifikators, der verwendet werden kann, um die bestimmte MGCF (20) zu ermitteln.

24. Verfahren nach Anspruch 17, ferner umfassend die Schritte, dass:
- an einer BGCF (32) eine Nachricht empfangen wird (S-231), die den "Terminierungs-ITE" anspricht, wobei der ITE ein erstes Informationsfeld mit einem Telefonie-Universal Resource Identifier "Tel-URI", der einen Zielteilnehmer identifiziert, und ein zweites Informationsfeld mit einer Information, die verwendet werden kann, um eine bestimmte MGCF (20) zu identifizieren, umfasst;
- das zweite Informationsfeld extrahiert wird (S-232, S-233), um die bestimmte MGCF (20) zu ermitteln; und
- die empfangene Nachricht, die den ITE anspricht, der bestimmten MGCF (20) zugesendet wird (S-234).

25. Verfahren zum Weiterleiten einer Sitzungsherstellungsanforderung, die von einem Ursprungsteilnehmer (11) eines existierenden Ursprungsnetzes (40) empfangen wird, über ein IP Multimedia Subsystem (50), "IMS", und Ansprechen eines Zielteilnehmers (12, 13), wobei das Verfahren den Schritt umfasst, dass:
- an einer Media Gateway Control Function-Einrichtung (25), "MGCF", von dem Ursprungsteilnehmer (11) eine Sitzungsherstellungsanforderung empfangen wird (S-201), die einen Zielteilnehmer (12, 13) anspricht, wobei der Ursprungsteilnehmer durch eine Teilnehmernummer identifiziert ist;
und ferner **dadurch gekennzeichnet, dass** die Schritte umfasst sind, dass:
- an der MGCF ein Ursprungs-IMS Telephony Endpoint "Ursprungs-ITE" erzeugt wird (S-202), wobei der Ursprungs-ITE ein erstes Informationsfeld mit einem Telefonie-Universal Resource Identifier "Tel-URI", der den Ursprungsteilnehmer identifiziert, und ein zweites Informationsfeld mit einer Information, die verwendet werden kann, um die MGCF (25) als die bestimmte MGCF zu identifizieren, die eine Sitzung zwischen dem Ursprungs- und dem Zielteilnehmer aufrecht erhält, umfasst; und
- die Sitzungsherstellungsanforderung, die den Ursprungs-ITE umfasst, an das IMS (31) übermittelt wird (S-203), um den Ursprungsteilnehmer und die MGCF, die die Sitzung aufrecht erhält, zu identifizieren.

26. Verfahren nach Anspruch 25,
wobei die Sitzungsherstellungsanforderung an eine Interrogating Call Session Control Function-Einrichtung (31), "I-CSCF", des IMS (50) übermittelt wird, die geeignet ist, um einen Weiterleitungspfad zu dem Zielteilnehmer (12, 13) zu ermitteln.

27. Verfahren nach Anspruch 25,
ferner umfassend den Schritt, dass der Ursprungs-ITE mit Semantikregeln gemäß einem Session Initiation Protocol in einen Universal Resource Identifier, einen "SIP URI", für eine Übermittlung an das IMS als Ursprungs-ITE übersetzt wird.

28. Verfahren nach Anspruch 25,
ferner umfassend den Schritt des Zuordnens der Information, die in dem zweiten Informationsfeld umfasst ist, und eines Identifikators, der verwendet werden kann, um die bestimmte MGCF (25) zu ermitteln.

29. Verfahren nach Anspruch 25, das ferner die Schritte umfasst, dass:
- an der MGCF (25) eine Nachricht empfangen wird (I-20-i), die den Ursprungs-ITE anspricht;
- das erste Informationsfeld extrahiert wird, um den bestimmten Ursprungsteilnehmer zu ermitteln; und
- die Nachricht dem existierenden Ursprungsnetz (40) zugesendet wird (I-20-o).

30. Benutzergerät (12) zum Zugreifen auf ein IP Multimedia Subsystem (50), "IMS", umfassend ein Mittel zum Senden und Empfangen einer Sitzungsherstellungsanforderung an das und von dem IMS, und ein Mittel zum Empfangen und Senden einer Antwort einer erfolgreichen Sitzungsherstellung von dem und an das IMS, und ferner **gekennzeichnet durch** ein Mittel zum Empfangen (S-205) eines IMS Telephony Endpoint "ITE", wobei der ITE ein erstes Informationsfeld mit einem Telefonie-Universal Resource Identifier "Tel-URI", der einen Endteilnehmer identifiziert, mit dem eine Sitzung hergestellt wurde, und ein zweites Informationsfeld mit einer Information, die verwendet werden kann, um eine bestimmte Media Gateway Control Function-Einrichtung (20, 25), "MGCF", zu identifizieren, die die Sitzung aufrecht erhält, umfasst, wobei das Benutzergerät geeignet ist, um diesen ITE zu speichern und diesen ITE bei weiteren Kommunikationen mit diesem Endteilnehmer einzubeziehen.

31. Computerprogramm, das in einen internen Speicher eines Computers mit Eingabe- und Ausgabeeinheiten sowie mit einer Verarbeitungseinheit geladen werden kann, wobei das Computerprogramm eine ausführbare Software umfasst, die geeignet ist, um die Verfahrensschritte nach einem der Ansprüche 17 bis 29 bei einer Durchführung in dem Computer auszuführen.

32. In einem Computer lesbarer Träger, wobei die ausführbare Software, die in dem Computerprogramm nach Anspruch 31 umfasst ist, auf diesem in einem Computer lesbaren Träger aufgezeichnet ist.

## Revendications

1. Un dispositif de fonction de commande de passerelle média (20), abrégé en « MGCF » (pour *Media Gateway Control Function,* fonction commande de passerelle média) configurés pour acheminer à travers un sous-système multimédia IP (50), abrégé en « IMS » (pour *IP Multimedia Subsystem,* sous-système multimédia IP), une demande d'établissement de session émise par un abonné émetteur (11, 12) et adressé à un abonné destinataire (13) connecté à un réseau hérité de destination (30), le MGCF comportant :
- des moyens de fermeture du signal d'entrée (I-10-i, 205-208) configurés pour recevoir de l'IMS une demande d'établissement de session adressé à un abonné destinataire (13) connecté à un réseau hérité de destination, l'abonné destinataire étant identifié par un numéro d'abonné ;
et étant **caractérisé en ce qu'**il comporte aussi :
- des moyens de fermeture du traitement (201, 202) configurés pour créer un point d'accès téléphonique IMS (abrégé en « ITE » pour *IMS Telephony Endpoint,* point d'accès téléphonique IMS) de fermeture, ledit ITE de fermeture comportant un premier champ de données comportant un identifiant universel de ressource téléphonique (abrégé en « tel URI » pour *Telephony Universal Resource Identifier,* identifiant universel de ressource téléphonique) qui identifie l'abonné destinataire (13), et un second champ de données comportant des informations utilisables pour s'identifier lui-même comme le MGCF (20) en train de maintenir une session entre les abonnés émetteurs et destinataires ; et
- des moyens de fermeture du signal de sortie (205-208, I-10-o) configurés pour renvoyer vers l'IMS une réponse d'établissement de session comportant l'ITE de fermeture afin qu'il identifie l'abonné destinataire et qu'il s'identifie lui-même comme le MGCF maintenant la session.

2. Le MGCF selon la revendication 1, dans lequel l'ITE de fermeture est créé suite à la réception (S-215) d'une réponse d'établissement de session provenant du réseau hérité de destination (30) et devant être renvoyée vers l'IMS.

3. Le MGCF selon la revendication 2, dans lequel la réponse d'établissement de session est renvoyée à un dispositif de fonction de commande de passerelle de sortie (32) de l'IMS, abrégé « BGCF » (pour *Breakout Gateway Control Function,* fonction de commande de passerelle de sortie), utilisable pour localiser un MGCF optimal pour maintenir une session entre les abonnés émetteurs et destinataires.

4. Le MGCF selon la revendication 1, dans lequel l'ITE comporte aussi un identifiant de session.

5. Le MGCF selon la revendication 1, comportant de plus un convertisseur (203) pour convertir l'ITE de fermeture en un identifiant universel de ressource dont les règles sémantiques respectent le protocole d'initiation de session, abrégé en « SIP URI » (pour *Session Initiation Protocol Universal Resource Identifier,* identifiant universel de ressource du protocole d'initiation de session).

6. Le MGCF selon la revendication 5, dans lequel les moyens de fermeture du signal de sortie sont configurées pour fournir le SIP URI comme ITE de fermeture.

7. Le MGCF selon la revendication 1, comportant de plus :
- des moyens secondaires de fermeture du signal d'entrée (204-208, I-10-i) configurés pour recevoir un message destiné à l'ITE de destination ; et
- un décomposeur (201) configurés pour extraire le premier champ de données et de déterminer l'abonné destinataire exact.

8. Un dispositif de fonction de commande de passerelle média (20), abrégé en « MGCF » (pour *Media Gateway Control Function,* fonction commande de passerelle média) configurés pour acheminer à travers un sous-système multimédia IP (50), abrégé en « IMS » (pour *IP Multimedia Subsystem,* sous-système multimédia IP), une demande d'établissement de session émise par un abonné émetteur (11) connecté à un réseau hérité d'émission (40), et adressé à un abonné destinataire (12, 13) le MGCF comportant :
- des moyens d'ouverture du signal d'entrée (I-40-i, 2010-211) configuré pour recevoir d'un abonné émetteur connecté à un réseau hérité d'émission une demande d'établissement de session adressé à un abonné destinataire, l'abonné émetteur (11) étant identifié par un numéro d'abonné ;
et étant **caractérisé en ce qu'**il comporte aussi :
- des moyens d'ouverture du traitement (201, 202) configurés pour créer un point d'accès téléphonique IMS (abrégé en « ITE » pour *IMS Telephony Endpoint,* point d'accès téléphonique IMS) d'ouverture, ledit ITE d'ouverture comportant un premier champ de données comportant un identifiant universel de ressource téléphonique (abrégé en « tel URI » pour *Telephony Universal Resource Identifier,* identifiant universel de ressource téléphonique) qui identifie l'abonné émetteur (11), et un second champ de données comportant des informations utilisables pour s'identifier lui-même comme le MGCF (25) en train de maintenir une session entre les abonnés émetteurs et destinataires ; et
- des moyens d'ouverture du signal de sortie (205-208, I-20-o) configurés pour transmettre vers l'IMS la demande d'établissement de session comportant l'ITE d'ouverture afin qu'il identifie l'abonné émetteur et qu'il s'identifie lui-même comme le MGCF maintenant la session.

9. Le MGCF selon la revendication 8, dans lequel la demande d'établissement de session est transmise à un dispositif de fonction de commande d'interrogation de session d'appel (31) de l'IMS, abrégé « I-CSCF » (pour *Interrogating Call Session Control Function,* fonction de commande d'interrogation de session d'appel), utilisable pour localiser un MGCF optimal pour déterminer un itinéraire d'acheminement jusqu'à l'abonné destinataire.

10. Le MGCF selon la revendication 8, dans lequel l'ITE comporte aussi un identifiant de session.

11. Le MGCF selon la revendication 8, comportant de plus un convertisseur (203) pour convertir l'ITE de fermeture en un identifiant universel de ressource dont les règles sémantiques respectent le protocole d'initiation de session, abrégé en « SIP URI » (pour *Session Initiation Protocol Universal Resource Identifier,* identifiant universel de ressource du protocole d'initiation de session).

12. Le MGCF selon la revendication 5, dans lequel les moyens d'ouverture du signal de sortie sont configurés pour fournir le SIP URI comme ITE d'ouverture.

13. Un dispositif de fonction de commande de passerelle de sortie (32), abrégé « BGCF » (pour *Breakout Gateway Control Function,* fonction de commande de passerelle de sortie), configuré pour localiser un dispositif de fonction de commande de passerelle média, abrégé en « MGCF » (pour *Media Gateway Control Function,* fonction commande de passerelle média), optimal pour acheminer vers un abonné destinataire (13) une demande d'établissement de session émise par un abonné émetteur (11) et reçue d'un sous-système multimédia IP, abrégé en « IMS » (pour *IP Multimedia Subsystem,* sous-système multimédia IP), le BGCF comportant :
- des moyens (322-324) configurés pour émettre vers plusieurs MGCF (20, 21, 22, 25) ;
et étant **caractérisé en ce qu'**il comporte aussi :
- des moyens (I-60-i, 325-328) configurés pour recevoir un message destiné à un point d'accès téléphonique IMS (abrégé en « ITE » pour *IMS Telephony Endpoint,* point d'accès téléphonique IMS), ledit ITE comportant un premier champ de données comportant un identifiant universel de ressource téléphonique (abrégé en « tel URI » pour *Telephony Universal Ressource Identifier,* identifiant universel de ressource téléphonique) qui identifie un abonné (11, 13), et un second champ de données comportant des informations configurés pour identifier un MGCF précis (20, 25) ;
- un décomposeur (323, 324) configurés pour extraire le second champ de données et de déterminer le MGCF exact ; et
- des moyens (I-10-o, 325-328) configuré pour soumettre le message reçu destiné à l'ITE audit MGCF (20).

14. Le MGCF selon la revendication 13, comportant de plus des moyens configurés pour acheminer des messages destinés à un identifiant universel de ressource téléphonique (abrégé en « tel URI » pour *Telephony Universal Resource Identifier,* identifiant universel de ressource téléphonique).

15. Le MGCF selon la revendication 13, comportant de plus des moyens configuré pour distinguer si un ITE reçu est un ITE d'ouverture identifiant un abonné émetteur (11) connecté à un réseau hérité d'émission (40), ou un ITE de fermeture identifiant un abonné destinataire (13) connecté à un réseau hérité de destination (30).

16. Le MGCF selon la revendication 13, comportant de plus des moyens de cartographie (322, 324) configurés pour cartographier les données contenues dans le second champ de données ainsi qu'un identifiant configuré pour déterminer le MGCF (20) exact.

17. Une méthode d'acheminement à travers un sous-système multimédia IP (50), abrégé en « IMS » (pour *IP Multimedia Subsystem,* sous-système multimédia IP), d'une demande d'établissement de session émise par un abonné émetteur (11, 12) et adressé à un abonné destinataire (13) connecté à un réseau hérité de destination (30), la méthode comportant l'étape suivante :
- la réception (S-213) via l'IMS par un dispositif de fonction de commande de passerelle média (20), abrégé en « MGCF » (pour *Media Gateway Control Function,* fonction commande de passerelle média), d'une demande d'établissement de session émise par un abonné émetteur (11, 12) et adressé à un abonné destinataire (13) connecté à un réseau hérité de destination (30), ledit abonné destinataire étant identifié par un numéro d'abonné ;
et étant **caractérisée en ce qu'**elle comporte aussi les étapes suivantes :
- la création (S-216) d'un point d'accès téléphonique IMS (abrégé en « ITE » pour *IMS Telephony Endpoint,* point d'accès téléphonique IMS) de fermeture, ledit ITE de fermeture comportant un premier champ de données comportant un identifiant universel de ressource téléphonique (abrégé en « tel URI » pour *Telephony Universal Resource Identifier,* identifiant universel de ressource téléphonique) qui identifie l'abonné destinataire (13), et un second champ de données comportant des informations utilisables pour identifier ledit MGCF (20) comme le MGCF en train de maintenir une session entre les abonnés émetteurs et destinataires ; et
- le renvoi (S-217) vers l'IMS d'une réponse d'établissement de session comportant l'ITE de fermeture afin qu'il identifie l'abonné destinataire et qu'il s'identifie lui-même comme le MGCF maintenant la session.

18. La méthode selon la revendication 17, dans laquelle l'étape de création de l'ITE de fermeture fait suite à une étape de réception (S-215) d'une réponse d'établissement de session provenant du réseau hérité de destination et devant être renvoyée vers l'IMS.

19. La méthode selon la revendication 17, comportant de plus les étapes suivantes :
- L'envoi (S-214) depuis le MGCF vers le réseau hérité de destination de la demande d'établissement de session avec numéro d'abonné de l'abonné destinataire ; et
- La réception (S-215) par le MGCF depuis le réseau hérité de destination d'une réponse d'établissement de session à transmettre vers l'IMS.

20. La méthode selon la revendication 17, dans laquelle la réponse d'établissement de session est renvoyé vers un dispositif de fonction de commande de passerelle de sortie (32) de l'IMS, abrégé « BGCF » (pour *Breakout Gateway Control Function,* fonction de commande de passerelle de sortie), configuré pour localiser un dispositif de fonction de commande de passerelle média, abrégé en « MGCF » (pour *Media Gateway Control Function,* fonction commande de passerelle média), optimal pour tenir une session entre les abonnés émetteur et destinataire.

21. La méthode selon la revendication 17, comportant de plus une étape de conversion de l'ITE de fermeture en un identifiant universel de ressource dont les règles sémantiques respectent le protocole d'initiation de session, abrégé en « SIP URI » (pour *Session Initiation Protocol Universal Resource Identifier,* identifiant universel de ressource du protocole d'initiation de session), et qui doit être renvoyé vers l'IMS en tant qu'ITE de fermeture.

22. La méthode selon la revendication 17, comportant de plus les étapes suivantes :
- la réception (S-234) par le MGCF d'un message destiné à l'ITE de fermeture ;
- l'extraction (S-235) du premier champ de données ; et
- la détermination (S-236) de l'abonné destinataire exact.

23. La méthode selon la revendication 17, comportant de plus une étape de cartographie des informations contenues dans le second champ de données ainsi qu'un identifiant utilisable pour déterminer le MGCF (20) exact.

24. La méthode selon la revendication 17, comportant de plus les étapes suivantes :
- la réception (S-231) par un BGCF (32) d'un message destiné à l'ITE de fermeture, ledit ITE de fermeture comportant un premier champ de données comportant un identifiant universel de ressource téléphonique (abrégé en « tel URI » pour *Telephony Universal Resource Identifier,* identifiant universel de ressource téléphonique) qui identifie l'abonné destinataire, et un second champ de données comportant des informations utilisables pour identifier un MGCF (20) précis ;
- l'extraction (S-232, S-233) du second champ de données pour déterminer ledit MGCF (20) ; et
- l'envoi (S-234) audit MGCF (20) du message reçu destiné à l'ITE.

25. Une méthode d'acheminement à travers un sous-système multimédia IP (50), abrégé en « IMS » (pour *IP Multimedia Subsystem,* sous-système multimédia IP), d'une demande d'établissement de session reçue d'un abonné émetteur (11) connecté à un réseau hérité d'émission (40), et adressé à un abonné destinataire (12, 13) la méthode comportant l'étape suivante :
- la réception (S-201) par un dispositif de fonction de commande de passerelle média (25), abrégé en « MGCF » (pour *Media Gateway Control Function,* fonction commande de passerelle média), d'une demande d'établissement de session émise par l'abonné émetteur (11) et adressé à un abonné destinataire (12, 13), ledit abonné émetteur étant identifié par un numéro d'abonné ;
et étant **caractérisée en ce qu'**elle comporte aussi les étapes suivantes :
- la création (S-216) au niveau du MGCF d'un point d'accès téléphonique IMS (abrégé en « ITE » pour *IMS Telephony Endpoint,* point d'accès téléphonique IMS) d'ouverture, ledit ITE de fermeture comportant un premier champ de données comportant un identifiant universel de ressource téléphonique (abrégé en « tel URI » pour *Telephony Universal Ressource Identifier,* identifiant universel de ressource téléphonique) qui identifie l'abonné émetteur, et un second champ de données comportant des informations utilisables pour identifier ledit MGCF (25) comme le MGCF précisément en train de maintenir une session entre les abonnés émetteurs et destinataires ; et
- le renvoi (S-202) vers l'IMS (31) de la demande d'établissement de session comportant l'ITE d'ouverture afin d'identifier l'abonné destinataire et le MGCF maintenant la session.

26. La méthode selon la revendication 25, dans lequel la demande d'établissement de session est transmise à un dispositif de fonction de commande d'interrogation de session d'appel (31) de l'IMS (50), abrégé « I-CSCF » (pour *Interrogating Call Session Control Function,* fonction de commande d'interrogation de session d'appel), utilisable pour déterminer un itinéraire d'acheminement jusqu'à l'abonné destinataire (12, 13).

27. La méthode selon la revendication 25, comportant de plus une étape de conversion de l'ITE d'ouverture en un identifiant universel de ressource dont les règles sémantiques respectent le protocole d'initiation de session, abrégé en « SIP URI » (pour *Session Initiation Protocol Universal Resource Identifier,* identifiant universel de ressource du protocole d'initiation de session), et qui doit être renvoyé vers l'IMS en tant qu'ITE d'ouverture.

28. La méthode selon la revendication 25, comportant de plus une étape de cartographie des informations contenues dans le second champ de données ainsi qu'un identifiant utilisable pour déterminer le MGCF (20) exact.

29. La méthode selon la revendication 25, comportant de plus les étapes suivantes :
- la réception (I-20-i) par le MGCF (25) d'un message destiné à l'ITE d'ouverture ;
- l'extraction du premier champ de données pour déterminer l'abonné émetteur exact ; et
- l'envoi du message (I-20-o) vers le réseau hérité émetteur (40).

30. Un équipement utilisateur (12) configuré pour accéder à un sous-système multimédia IP (50), abrégé en « IMS » (pour *IP Multimedia Subsystem,* sous-système multimédia IP), comportant des moyens d'envoi vers ledit IMS et de réception depuis ledit IMS d'une demande d'établissement de session, ainsi que des moyens de réception depuis ledit IMS et d'envoi vers ledit IMS d'une réponse d'établissement de session, **caractérisé en ce qu'**il comporte aussi des moyens de réception (S-205) d'un point d'accès téléphonique IMS (abrégé en « ITE » pour *IMS Telephony Endpoint,* point d'accès téléphonique IMS), ledit ITE comportant un premier champ de données comportant un identifiant universel de ressource téléphonique (abrégé en « tel URI » pour *Telephony Universal Resource Identifier,* identifiant universel de ressource téléphonique) qui identifie un abonné final avec lequel une session a été établie, et un second champ de données comportant des informations qui permettent d'identifier un dispositif de fonction de commande de passerelle média (20, 25), abrégé en « MGCF » (pour *Media Gateway Control Function,* fonction commande de passerelle média) précisément en train de maintenir ladite session, ledit équipement utilisateur étant conçu pour stocker ledit ITE et l'inclure dans les communications ultérieures avec le même utilisateur.

31. Un programme informatique configuré pour être chargé dans la mémoire interne d'un ordinateur doté d'unités d'entrée et de sortie ainsi que d'une unité de traitement, ledit programme comportant des logiciels exécutables prévus pour exécuter les étapes des méthodes selon les revendications 17 à 29 lors de leur exécution par l'ordinateur.

32. Un support conçu pour être lu par un ordinateur, sur lequel sont enregistrés les logiciels exécutables que comporte le programme informatique selon la revendication 31.
